# EUROPEAN PATENT APPLICATION

(11) **EP 4 765 980 A1**
(43) Date of publication of application: **24.06.2026**
(21) Application number: 24867434.3
(22) Date of filing: 18.09.2024
(51) Int. Cl.: H04W 72/0457

(54) **DATA TRANSMISSION METHOD AND RELATED APPARATUS**

(30) Priority: 22.09.2023 CN 202311244361
(71) Applicant: HUAWEI TECHNOLOGIES CO., LTD., Shenzhen 518129 (CN)
(72) Inventor: WANG, Xiaona, Shenzhen, Guangdong 518129 (CN); LIU, Fengwei, Shenzhen, Guangdong 518129 (CN); FAN, Bo, Shenzhen, Guangdong 518129 (CN)
(74) Representative: Gill Jennings & Every LLP
(86) International application number: PCT/CN2024/119378
(87) International publication number: WO 2025/061026

(57) **Abstract**

Embodiments of the present disclosure relate to a data transmission method and a related apparatus. The method includes: receiving or sending a signal based on a first transmission mode, where the first transmission mode corresponds to a first port capability and/or a first bandwidth capability; performing transmission mode switching from the first transmission mode to a second transmission mode, where the second transmission mode corresponds to a second port capability and/or a second bandwidth capability; and receiving or sending a signal based on the second transmission mode. In this manner, the terminal device may dynamically perform the transmission mode switching, to save energy of a terminal device when a service volume is small, and implement high-capacity transmission when the service volume is large.

## Description

### CROSS-REFERENCE TO RELATED APPLICATIONS

This application claims priority to Chinese Patent Application No. 202311244361.6, filed on September 22, 2023 and entitled "DATA TRANSMISSION METHOD AND RELATED APPARATUS", which is incorporated herein by reference in its entirety.

### TECHNICAL FIELD

Embodiments of the present disclosure relate to the communication field, and more specifically, to a data transmission method and a related apparatus.

### BACKGROUND

In a wireless communication system, a baseband processing capability on a terminal device (User Equipment, UE) side is one of main factors that affect UE costs and power consumption, and main factors related to the baseband processing capability are a port capability, a bandwidth capability, and the like. Baseband processing includes at least one of the following: channel estimation, equalization, channel encoding, channel decoding, symbol modulation, symbol demodulation, waveform modulation, waveform demodulation, source encoding, source decoding, or the like. Due to characteristics of large-bandwidth spectrum resources of some frequency bands, rich multipath channel environments, and diversified requirements of future communication services, there may be a plurality of transmission and signal processing requirements of different bandwidths and different numbers of ports on the UE side, to satisfy different service transmission requirements on a premise that costs and power consumption are limited. Currently, a scheduling manner of the baseband processing capability needs to be further studied.

### SUMMARY

Example embodiments of the present disclosure provide a data transmission method and a related apparatus, so that sharing of a port capability and a bandwidth capability can be implemented. This helps reduce power consumption of a terminal device, or improve a user-perceived rate.

According to a first aspect, an embodiment of the present disclosure provides a data transmission method. The method may be performed by a terminal device, or may be performed by a component (for example, a processor, a chip, or a chip system) in the terminal device, or may be performed by a logical module or software that can implement all or some functions of the terminal device. The method includes: receiving or sending a signal based on a first transmission mode, where the first transmission mode corresponds to a first port capability and/or a first bandwidth capability; performing transmission mode switching from the first transmission mode to a second transmission mode, where the second transmission mode corresponds to a second port capability and/or a second bandwidth capability; and receiving or sending a signal based on the second transmission mode.

In this manner, the terminal device may dynamically perform the transmission mode switching, to reduce power consumption of the terminal device, or implement higher-rate transmission, thereby improving a user-perceived rate. For example, the terminal device may dynamically disable a part of transmission or reception channels, to reduce the power consumption of the terminal device; or dynamically enable more transmission or reception channels, to implement the higher-rate transmission, thereby improving the user-perceived rate.

In some embodiments, the first port capability and the second port capability include at least one of the following: a number of pilot ports, a number of data ports, a number of pilot layers, a number of data channel layers, a number of transmission antenna ports, a number of reception antenna ports, a number of transmission ports, a number of reception ports, or a connection relationship between a radio frequency (radio frequency, RF) chain (RF Chain) and an antenna.

In some embodiments, the first bandwidth capability and the second bandwidth capability include at least one of the following: a single-carrier bandwidth, a multi-carrier aggregation bandwidth, a number of aggregated multi-carriers, a pilot signal bandwidth, a data channel bandwidth, an uplink bandwidth, a downlink bandwidth, or an operating bandwidth of a radio frequency chain.

In some embodiments, the first bandwidth capability is less than or equal to the second bandwidth capability when the first port capability is greater than or equal to the second port capability, or the first port capability is less than or equal to the second port capability when the first bandwidth capability is greater than or equal to the second bandwidth capability. In other words, sharing of a bandwidth capability and a port capability can be supported on a terminal device side. For example, the terminal device may reduce numbers of reception and transmission ports, and support transmission with a larger bandwidth based on a saved processing capability, or the terminal device may reduce a transmission bandwidth, and support transmission with a larger number of ports based on a saved processing capability. In this way, the terminal device may dynamically switch an operating bandwidth and change numbers of uplink and downlink antenna ports in a fixed capability resource pool, thereby implementing performance requirements of power consumption and a capacity of the terminal device in different channel environments.

In some embodiments, the method further includes: before performing the transmission mode switching, sending, to a network device, capability information supported by the terminal device, where the capability information indicates a port capability and/or a bandwidth capability, the port capability includes at least the first port capability and the second port capability, and the bandwidth capability includes at least the first bandwidth capability and the second bandwidth capability.

In some embodiments, the capability information further indicates a processing latency for switching between different capabilities. In some embodiments, the processing latency for switching between different capabilities may be reported separately.

In some embodiments, the method further includes: before performing the transmission mode switching, receiving a transmission mode indication from the network device, where the transmission mode indication includes the second transmission mode and/or a time at which the second transmission mode takes effect. In this manner, the terminal device may perform the transmission mode switching based on the transmission mode indication of the network device, so that the network device determines, based on a real-time scheduling requirement, a transmission mode to which the terminal device is to switch.

In some embodiments, receiving the transmission mode indication includes at least one of the following: receiving the transmission mode indication by using radio resource control (radio resource control, RRC) signaling; receiving the transmission mode indication by using bandwidth part (bandwidth part, BWP) configuration information; receiving the transmission mode indication by using serving cell configuration information; receiving the transmission mode indication by using secondary cell (secondary cell, SCell) activation signaling; or receiving the transmission mode indication by using SCell deactivation signaling. In this manner, a flexible transmission mode indication manner is provided.

In some embodiments, performing the transmission mode switching includes at least one of the following: changing an operating port of the terminal device; changing an operating bandwidth of the terminal device; or changing a baseband processing capability of the terminal device. In this manner, the terminal device can implement flexible switching between different transmission modes.

In some embodiments, the method further includes: before performing the transmission mode switching, sending a transmission mode switching request to the network device.

In some embodiments, sending the transmission mode switching request includes at least one of the following: sending the transmission mode switching request through a physical random access channel (physical random access channel, PRACH); sending the transmission mode switching request through a physical uplink shared channel (physical uplink shared channel, PUSCH); or sending the transmission mode switching request through a physical uplink control channel (physical uplink control channel, PUCCH). In this manner, a flexible transmission mode switching request manner is provided.

In some embodiments, the transmission mode switching request includes at least one of the following: an uplink resource request used to report the second transmission mode, a reason why the terminal device performs the transmission mode switching, an indication of the second transmission mode after the switching, or a transmission mode switching guard interval. The foregoing reason for the transmission mode switching in the transmission mode switching request may be a direct reason, or may be a classified reason, for example, a reason on a terminal device side or a reason on a network device side.

In some embodiments, a trigger condition for sending the transmission mode switching request to the network device includes at least one of the following: an energy saving requirement of the terminal device changes; channel quality of the terminal device changes; service load of the network device changes; a to-be-transmitted service volume of the terminal device changes; or a channel feature of the terminal device changes. In this manner, the terminal device may request, based on a real-time status requirement, the network device to switch a transmission mode, to save energy of the terminal device, or implement higher-rate transmission, thereby improving a user-perceived rate.

According to a second aspect, an embodiment of the present disclosure provides a method. The method may be performed by a network device, or may be performed by a component (for example, a processor, a chip, or a chip system) in the network device, or may be performed by a logical module or software that can implement all or some functions of the network device. The method includes: sending a signal to a terminal device or receiving a signal from the terminal device based on a first transmission mode of the terminal device, where the first transmission mode corresponds to a first port capability and/or a first bandwidth capability; and after the terminal device performs transmission mode switching from the first transmission mode to a second transmission mode, sending the signal to the terminal device or receiving the signal from the terminal device based on the second transmission mode of the terminal device, where the second transmission mode corresponds to a second port capability and/or a second bandwidth capability.

In this manner, the network device may support dynamic switching of a transmission mode on a terminal device side, to save power consumption of the terminal device, or implement higher-rate transmission, thereby improving a user-perceived rate. For example, the network device may dynamically change, based on a real-time service requirement, a transmission bandwidth and numbers of reception and transmission antenna ports of the terminal device. When the terminal device has an energy saving requirement or a to-be-transmitted service volume of the terminal device is small, a part of radio frequency channels are disabled, or a transmission bandwidth is reduced, or a number of transmission ports is decreased, to reduce a baseband signal processing requirement, and save energy of the terminal devices. When multipath channel environments of the terminal device are rich and network load is large, more reception and transmission channels are enabled, or a connection relationship between a radio frequency chain of the terminal device and a physical antenna is switched from an antenna structure using hybrid beamforming (hybrid beamforming, HBF) to an antenna structure using digital beamforming (digital beamforming, DBF), to increase a number of air interface transmission layers of the terminal device, thereby implementing high-capacity transmission.

In some embodiments, the first port capability and the second port capability include at least one of the following: a number of pilot ports, a number of data ports, a number of pilot layers, a number of data channel layers, a number of transmission antenna ports, a number of reception antenna ports, a number of transmission ports, a number of reception ports, or a connection relationship between a radio frequency chain and an antenna.

In some embodiments, the first bandwidth capability and the second bandwidth capability include at least one of the following: a single-carrier bandwidth, a multi-carrier aggregation bandwidth, a number of aggregated multi-carriers, a pilot signal bandwidth, a data channel bandwidth, an uplink bandwidth, a downlink bandwidth, or an operating bandwidth of a radio frequency chain.

In some embodiments, the first bandwidth capability is less than or equal to the second bandwidth capability when the first port capability is greater than or equal to the second port capability, or the first port capability is less than or equal to the second port capability when the first bandwidth capability is greater than or equal to the second bandwidth capability. In other words, sharing of a bandwidth capability and a port capability can be supported on a terminal device side, to implement performance requirements of power consumption and a capacity of the terminal device in different channel environments.

In some embodiments, the method further includes: receiving, from the terminal device, capability information supported by the terminal device, where the capability information indicates a port capability and/or a bandwidth capability, the port capability includes at least the first port capability and the second port capability, and the bandwidth capability includes at least the first bandwidth capability and the second bandwidth capability.

In some embodiments, the capability information further indicates a processing latency for switching between different capabilities. In some embodiments, the processing latency for switching between different capabilities may be reported separately.

In some embodiments, the method further includes: determining, based on the capability information, one or more transmission modes supported by the terminal device; and determining, from the one or more transmission modes, the second transmission mode to which the terminal device is to switch.

In some embodiments, the method further includes: sending a transmission mode indication to the terminal device, where the transmission mode indication includes the second transmission mode and/or a time at which the second transmission mode takes effect. In this manner, the network device may determine, based on the capability information reported by the terminal device, the transmission mode that can be supported by the terminal device, and determine, based on a real-time scheduling requirement, the transmission mode to which the terminal device is to switch.

In some embodiments, sending the transmission mode indication includes at least one of the following: sending the transmission mode indication by using RRC signaling; sending the transmission mode indication by using BWP configuration information; sending the transmission mode indication by using serving cell configuration information; sending the transmission mode indication by using SCell activation signaling; or sending the transmission mode indication by using SCell deactivation signaling. In this manner, a flexible transmission mode indication manner is provided.

In some embodiments, the method further includes: receiving a transmission mode switching request from the terminal device.

In some embodiments, the transmission mode switching request includes at least one of the following: an uplink resource used by the terminal device to report the second transmission mode, a reason why the terminal device performs the transmission mode switching, an indication of the second transmission mode after the switching, or a transmission mode switching guard interval.

In some embodiments, the method further includes: receiving, from the terminal device, a message indicating that the transmission mode switching has been completed, where the message indicating that the transmission mode switching has been completed includes at least one of the following: whether the transmission mode switching is completed, a reason why the terminal device performs the transmission mode switching, and an indication of the second transmission mode after the switching. The foregoing reason for the transmission mode switching in the received message indicating that the transmission mode switching has been completed may be a direct reason, or may be a classified reason, for example, a reason on a terminal device side or a reason on a network device side.

According to a third aspect, an embodiment of the present disclosure provides a communication apparatus. The communication apparatus includes a transceiver module and a processing module. The transceiver module is configured to receive or send a signal based on a first transmission mode, where the first transmission mode corresponds to a first port capability and/or a first bandwidth capability. The processing module is configured to perform transmission mode switching from the first transmission mode to a second transmission mode, where the second transmission mode corresponds to a second port capability and/or a second bandwidth capability. The transceiver module is further configured to receive or send the signal based on the second transmission mode.

In some embodiments, the first port capability and the second port capability include at least one of the following: a number of pilot ports, a number of data ports, a number of pilot layers, a number of data channel layers, a number of transmission antenna ports, a number of reception antenna ports, a number of transmission ports, a number of reception ports, or a connection relationship between a radio frequency chain and an antenna.

In some embodiments, the first bandwidth capability and the second bandwidth capability include at least one of the following: a single-carrier bandwidth, a multi-carrier aggregation bandwidth, a number of aggregated multi-carriers, a pilot signal bandwidth, a data channel bandwidth, an uplink bandwidth, a downlink bandwidth, or an operating bandwidth of a radio frequency chain.

In some embodiments, the first bandwidth capability is less than or equal to the second bandwidth capability when the first port capability is greater than or equal to the second port capability, or the first port capability is less than or equal to the second port capability when the first bandwidth capability is greater than or equal to the second bandwidth capability.

In some embodiments, the transceiver module is further configured to: before performing the transmission mode switching, send, to a network device, capability information supported by the terminal device, where the capability information indicates a port capability and/or a bandwidth capability, the port capability includes at least the first port capability and the second port capability, and the bandwidth capability includes at least the first bandwidth capability and the second bandwidth capability.

In some embodiments, the capability information further indicates a processing latency for switching between different capabilities. In some embodiments, the processing latency for switching between different capabilities may be reported separately by the transceiver module.

In some embodiments, the transceiver module is further configured to: before performing the transmission mode switching, receive a transmission mode indication from the network device, where the transmission mode indication includes the second transmission mode and/or a time at which the second transmission mode takes effect.

In some embodiments, the transceiver module receives the transmission mode indication by at least one of the following: receiving the transmission mode indication by using RRC signaling; receiving the transmission mode indication by using BWP configuration information; receiving the transmission mode indication by using serving cell configuration information; receiving the transmission mode indication by using SCell activation signaling; or receiving the transmission mode indication by using SCell deactivation signaling.

In some embodiments, the processing module performs the transmission mode switching by at least one of the following: changing an operating port of the terminal device; changing an operating bandwidth of the terminal device; or changing a baseband processing capability of the terminal device.

In some embodiments, the transceiver module is further configured to: before performing the transmission mode switching, send a transmission mode switching request to the network device.

In some embodiments, the transceiver module sends the transmission mode switching request by at least one of the following: sending the transmission mode switching request through a PRACH; sending the transmission mode switching request through a PUSCH; or sending the transmission mode switching request through a PUCCH.

In some embodiments, the transmission mode switching request includes at least one of the following: an uplink resource request used to report the second transmission mode, a reason why the terminal device performs the transmission mode switching, an indication of the second transmission mode after the switching, or a transmission mode switching guard interval.

In some embodiments, a trigger condition for sending the transmission mode switching request to the network device includes at least one of the following: an energy saving requirement of the terminal device changes; channel quality of the terminal device changes; service load of the network device changes; a to-be-transmitted service volume of the terminal device changes; or a channel feature of the terminal device changes.

Optionally, the transceiver module may include a sending module and a receiving module. The sending module is configured to perform the sending operation in the foregoing embodiment. The receiving module is configured to perform the receiving operation in the foregoing embodiment.

According to a fourth aspect, an embodiment of the present disclosure provides a communication apparatus. The communication apparatus includes a transceiver module. The transceiver module is configured to send a signal to a terminal device or receive a signal from the terminal device based on a first transmission mode of the terminal device, where the first transmission mode corresponds to a first port capability and/or a first bandwidth capability. The transceiver module is further configured to: after the terminal device performs transmission mode switching from the first transmission mode to a second transmission mode, send the signal to the terminal device or receive the signal from the terminal device based on the second transmission mode of the terminal device, where the second transmission mode corresponds to a second port capability and/or a second bandwidth capability.

In some embodiments, the first port capability and the second port capability include at least one of the following: a number of pilot ports, a number of data ports, a number of pilot layers, a number of data channel layers, a number of transmission antenna ports, a number of reception antenna ports, a number of transmission ports, a number of reception ports, or a connection relationship between a radio frequency chain and an antenna.

In some embodiments, the first bandwidth capability and the second bandwidth capability include at least one of the following: a single-carrier bandwidth, a multi-carrier aggregation bandwidth, a number of aggregated multi-carriers, a pilot signal bandwidth, a data channel bandwidth, an uplink bandwidth, a downlink bandwidth, or an operating bandwidth of a radio frequency chain.

In some embodiments, the first bandwidth capability is less than or equal to the second bandwidth capability when the first port capability is greater than or equal to the second port capability, or the first port capability is less than or equal to the second port capability when the first bandwidth capability is greater than or equal to the second bandwidth capability.

In some embodiments, the transceiver module is further configured to receive, from the terminal device, capability information supported by the terminal device, where the capability information indicates a port capability and/or a bandwidth capability, the port capability includes at least the first port capability and the second port capability, and the bandwidth capability includes at least the first bandwidth capability and the second bandwidth capability.

In some embodiments, the capability information further indicates a processing latency for switching between different capabilities. In some embodiments, the processing latency for switching between different capabilities may be reported separately.

In some embodiments, the communication apparatus further includes a processing module. The processing module is configured to: determine, based on the capability information, one or more transmission modes supported by the terminal device; and determine, from the one or more transmission modes, the second transmission mode to which the terminal device is to switch.

In some embodiments, the transceiver module is further configured to: send a transmission mode indication to the terminal device, where the transmission mode indication includes the second transmission mode and/or a time at which the second transmission mode takes effect.

In some embodiments, the transceiver module sends the transmission mode indication by at least one of the following: sending the transmission mode indication by using RRC signaling; sending the transmission mode indication by using BWP configuration information; sending the transmission mode indication by using serving cell configuration information; sending the transmission mode indication by using SCell activation signaling; or sending the transmission mode indication by using SCell deactivation signaling.

In some embodiments, the transceiver module is further configured to receive a transmission mode switching request from the terminal device.

In some embodiments, the transmission mode switching request includes at least one of the following: an uplink resource used by the terminal device to report the second transmission mode, a reason why the terminal device performs the transmission mode switching, an indication of the second transmission mode after the switching, or a transmission mode switching guard interval.

In some embodiments, the transceiver module is further configured to receive, from the terminal device, a message indicating that the transmission mode switching has been completed, where the message indicating that the transmission mode switching has been completed includes at least one of the following: whether the transmission mode switching is completed, a reason why the terminal device performs the transmission mode switching, and an indication of the second transmission mode after the switching.

Optionally, the transceiver module may include a sending module and a receiving module. The sending module is configured to perform the sending operation in the foregoing embodiment. The receiving module is configured to perform the receiving operation in the foregoing embodiment.

According to a fifth aspect, an embodiment of the present disclosure provides a communication apparatus. The communication apparatus includes a processor. The processor is configured to execute a computer program or computer instructions in a memory, to perform the method according to any one of the first aspect or the second aspect or the embodiments of the first aspect or the second aspect.

Optionally, the communication apparatus further includes a transceiver, and the processor is configured to control the transceiver to receive or send a signal. The transceiver includes a transmitter and a receiver. The transmitter is configured to perform a sending operation in the foregoing embodiment, and the receiver is configured to perform a receiving operation in the foregoing embodiment.

According to a sixth aspect, an embodiment of the present disclosure provides a communication apparatus. The communication apparatus includes a processor and a memory. The memory stores a computer program or computer instructions, and the processor is configured to invoke and run the computer program or the computer instructions stored in the memory, so that the processor implements the method according to any one of the first aspect or the second aspect or the embodiments of the first aspect or the second aspect.

Optionally, the communication apparatus further includes a transceiver, and the processor is configured to control the transceiver to receive or send a signal. The transceiver includes a transmitter and a receiver. The transmitter is configured to perform a sending operation in the foregoing embodiment, and the receiver is configured to perform a receiving operation in the foregoing embodiment.

According to a seventh aspect, an embodiment of the present disclosure provides a communication apparatus. The communication apparatus includes a processor and an interface circuit. The processor is configured to: communicate with another apparatus through the interface circuit, and perform the method according to any one of the first aspect or the second aspect or the embodiments of the first aspect or the second aspect. There are one or more processors.

According to an eighth aspect, an embodiment of the present disclosure provides a communication apparatus. The communication apparatus includes a processor, configured to be connected to a memory, and configured to invoke a program stored in the memory, to perform the method according to any one of the first aspect or the second aspect or the embodiments of the first aspect or the second aspect. The memory may be located inside the communication apparatus, or may be located outside the apparatus. In addition, there are one or more processors.

In some embodiments, the apparatus according to the third aspect to the eighth aspect may be a chip or a chip system.

According to a ninth aspect, an embodiment of the present disclosure provides a computer program product including computer instructions. When the computer program product is run on a computer, the computer is enabled to perform the method according to any one of the first aspect or the second aspect or the embodiments of the first aspect or the second aspect.

According to a tenth aspect, an embodiment of the present disclosure provides a computer-readable storage medium. The computer-readable storage medium includes computer instructions; and when the instructions are run on a computer, the computer is enabled to perform the method according to any one of the first aspect or the second aspect or the embodiments of the first aspect or the second aspect.

According to an eleventh aspect, an embodiment of the present disclosure provides a chip apparatus. The chip apparatus includes a processor, configured to invoke a computer program or computer instructions in a memory, so that the processor performs the method according to any one of the first aspect or the second aspect or the embodiments of the first aspect or the second aspect.

Optionally, the processor is coupled to the memory through an interface.

According to a twelfth aspect, an embodiment of the present disclosure provides a communication system. The communication system includes a first apparatus and a second apparatus, the first apparatus is configured to perform the method according to any one of the first aspect or the embodiments of the first aspect, and the second apparatus is configured to perform the method according to any one of the second aspect or the embodiments of the second aspect.

### BRIEF DESCRIPTION OF DRAWINGS

With reference to the accompanying drawings and the following detailed descriptions, the foregoing and other features, advantages, and aspects of embodiments of the present disclosure become more apparent. Several implementations of the present disclosure are shown herein by way of an example but not a limitation. In the accompanying drawings:
FIG. 1A is a diagram of a communication system to which some embodiments of the present disclosure may be applied;
FIG. 1B is a diagram of another communication system to which some embodiments of the present disclosure may be applied;
FIG. 1C is a diagram of a network element structure according to some embodiments of the present disclosure;
FIG. 2 is a signaling diagram of a communication process according to some embodiments of the present disclosure;
FIG. 3 is a signaling diagram of another communication process according to some embodiments of the present disclosure;
FIG. 4 is a signaling diagram of still another communication process according to some embodiments of the present disclosure;
FIG. 5 is a flowchart of a communication process according to some embodiments of the present disclosure;
FIG. 6 is a flowchart of another communication process according to some embodiments of the present disclosure;
FIG. 7 is a diagram of a structure of a possible communication apparatus according to an embodiment of the present disclosure; and
FIG. 8 is a diagram of a structure of another possible communication apparatus according to an embodiment of the present disclosure.

In the accompanying drawings, same or similar reference numerals indicate same or similar elements.

### DESCRIPTION OF EMBODIMENTS

Embodiments of the present disclosure are described in more detail below with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In the present disclosure, the term "include" and similar terms thereof should be understood as non-exclusive inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

It may be understood that "sending" and "receiving" in the present disclosure indicate a signal transmission direction. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of the chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on the information between the source at which the information is sent and the destination end, but the destination end may understand valid information from the source. Similar descriptions in the present disclosure may be similarly understood. Details are not described again.

The following describes a terminal device and a network device in the present disclosure.

The terminal device is also referred to as user equipment (user equipment, UE), a mobile station (mobile station, MS), a mobile terminal (mobile terminal, MT), customer premise equipment (customer premise equipment, CPE), or the like. The terminal device is a device that includes a wireless communication function (providing voice/data connectivity for a user), for example, a handheld device having a wireless connection function, a vehicle-mounted device, or a machine type communication (machine type communication, MTC) terminal. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self driving may be an uncrewed aerial vehicle, a helicopter, or an airplane. For example, the wireless terminal in the internet of vehicles may be a vehicle-mounted device, vehicle equipment, a vehicle-mounted module, a vehicle, a ship, or the like. The wireless terminal in industrial control may be a camera, a robot, a robotic arm, or the like. The wireless terminal in the smart home may be a television, an air conditioner, a sweeper, a speaker, a set-top box, or the like.

It should be noted that the terminal device may be a device or an apparatus with a chip, a device or an apparatus integrated with a circuit, or a chip, a module, or a control unit in the device or the apparatus shown above. This is not specifically limited in the present disclosure.

The network device is a device that is deployed in a radio access network and that provides a wireless communication function for the terminal device. The network device may also be referred to as an access network (radio access network, RAN) entity, an access node, a network node, a communication apparatus, or the like.

Specifically, the network device may be an access network device in a cellular system related to the 3rd generation partnership project (3rd generation partnership project, 3GPP), for example, a 4th generation (4th generation, 4G) mobile communication system or a 5G mobile communication system. Alternatively, the network device may be an access network device in an open access network (open RAN, O-RAN, or ORAN) or a cloud radio access network (cloud radio access network, CRAN). Alternatively, the network device may be an access network device in a communication system obtained by converging two or more of the foregoing communication systems.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a wireless controller in a CRAN scenario, a wireless backhaul node, a transmission point (transmission point, TP), or a transmission reception point (transmission reception point, TRP). The network device may alternatively be an access network device in a 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in a 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna unit (active antenna unit, AAU), or a remote radio head (remote radio head, RRH). Alternatively, the network device may be a server, a wearable device, a vehicle, a vehicle-mounted device, or the like. For example, the network device may be a road side unit (road side unit, RSU) in a V2X technology.

It should be noted that in different systems, the CU (or the CU-CP and the CU-UP), the DU, or the RU may have different names, but a person skilled in the art may understand meanings of the names. For example, in an open access network (open radio access network, ORAN) system, the CU may also be referred to as an open central unit (open central unit, O-CU) or an open CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open CU-CP, the central unit-user plane (central unit-user plane, CU-UP) may also be referred to as an open central unit-user plane (open central unit-user plane, O-CU-UP) or an open CU-UP, and the RU may also be referred to as an open radio unit (open radio unit, O-RU). This is not specifically limited in the present disclosure. Any unit in the CU, the CU-CP, the CU-UP, the DU, and the RU in the present disclosure may be implemented by a software module, a hardware module, or a combination of a software module and a hardware module.

Optionally, for network elements in the ORAN system, each network element may implement a protocol layer function shown in Table 1.

**Table 1**

| ORAN network element | Protocol layer function |
|---|---|
| O-CU-CP | RRC and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (MAC), and physical upper layer (PHY-high) |
| O-RU | Physical lower layer (PHY-low) |

It should be noted that the network device may be one or more network elements shown in Table 1. This is not specifically limited in the present disclosure.

It should be noted that Table 1 is merely an example. During actual application, a protocol layer function supported by each network element is not limited. For example, each network element may support more protocol layer functions, or the protocol layer function supported by each network element is specifically configured based on an actual situation. This is not specifically limited in the present disclosure.

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has a part of functions of a core network, and the CU may include a CU-CP and a CU-UP. The CU and the DU may be configured based on wireless network protocol layer functions implemented by the CU and the DU. For example, the CU is configured to implement functions of a PDCP layer and a protocol layer above the PDCP layer (for example, an RRC layer and/or an SDAP layer). The DU is configured to implement a function of a protocol layer below a PDCP layer (for example, an RLC layer, a MAC layer, and/or a physical layer (PHY layer)). For another example, the CU is configured to implement a function of a protocol layer above a PDCP layer (for example, an RRC layer and/or an SDAP layer), and the DU is configured to implement functions of the PDCP layer and a protocol layer below the PDCP layer (for example, an RLC layer, a MAC layer, and/or a PHY layer).

When the CU includes the CU-CP and a CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element that is in the core network and that is configured to implement a control plane function. The network element configured to implement the control plane function in the core network may be an access and mobility function network element, for example, an access and mobility management function (access and mobility management function, AMF) in the 5G mobile communication system. The access and mobility function network element is configured to be responsible for mobility management in a mobile network, for example, location update of a terminal device, network registration of the terminal device, and handover of the terminal device. The CU-UP may interact with a network element that is in the core network and that is configured to implement a user plane function. The network element configured to implement the user plane function in the core network, for example, a user function (user plane function, UPF) in the 5G mobile communication system, is configured to be responsible for forwarding and receiving data in the terminal device.

The foregoing configuration of the CU and the DU is merely an example. Alternatively, functions of the CU and the DU may be configured as required. For example, the CU or the DU may be configured to have functions of more protocol layers, or the CU or the DU may be configured to have some processing functions of protocol layers. For example, a part of functions of the RLC layer and a function of a protocol layer above the RLC layer are set on the CU, and remaining functions of the RLC layer and a function of a protocol layer below the RLC layer are set on the DU. For another example, functions of the CU or the DU may alternatively be obtained through division based on a service type or another system requirement. For example, division is performed based on a latency, a function whose processing time needs to satisfy a small latency requirement is set on the DU, and a function whose processing time does not need to satisfy the latency requirement is set on the CU.

The DU and the RU may work together to implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions are closer to the MAC layer. The lower-layer function of the physical layer may include another part of functions of the physical layer, and the part of functions are closer to an intermediate radio frequency side.

Optionally, the network device may alternatively be a core network device. The core network device is responsible for access control, registration management, service management, mobility management, or the like for the terminal device to access a network. Some embodiments of the present disclosure may relate to a beam. The beam may be represented in an NR protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, or the like. The beam may be indicated by using a transmission configuration indicator (transmission configuration indicator, TCI) state (TCI-state) parameter, or may be indicated by using a spatial relation (spatial relation) parameter. Therefore, in the present disclosure, the beam may be replaced with the spatial domain filter, the spatial filter, the spatial domain parameter, the spatial parameter, the spatial domain setting, the spatial setting, the QCL information, the QCL assumption, the QCL indication, a TCI-state (uplink (Downlink, DL) TCI-state, a downlink (Uplink, UL) TCI-state), a spatial relationship, or the like. The foregoing terms are also equivalent to each other. Alternatively, the beam may be replaced with another term for representing the beam. This is not limited in the present disclosure.

A beam used to send a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI-state.

A beam used to receive a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation (spatial relation), an uplink TCI-state, or a sounding reference signal (sounding reference signal, SRS) resource (indicating a transmission beam using the SRS). Therefore, the uplink beam may be replaced with the SRS resource.

The transmission beam may be spatial distribution of signal strength formed in different directions after a signal is transmitted through an antenna, and the reception beam may be spatial distribution of signal strength, in different directions, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, a network device measures different beams by using different resources, a terminal device feeds back measured resource quality, and then the network device learns quality of a corresponding beam. During data transmission, beam information is also indicated by using a resource corresponding to the beam information. For example, the network device indicates information about a physical downlink shared channel (physical downlink shared channel, PDSCH) beam of the terminal device by using a TCI field in downlink control information (downlink control information, DCI).

Optionally, a plurality of beams having same or similar communication features are considered as one beam. One beam may include one or more antenna ports, configured to transmit a data channel, a control channel, a sounding signal, and the like. The one or more antenna ports forming the beam may also be considered as one antenna port set.

In embodiments of the present disclosure, unless otherwise specified, the beam is a transmission beam of the network device. During beam measurement, each beam of the network device corresponds to one resource. Therefore, an index of the resource can uniquely identify a beam corresponding to the resource.

There may be a plurality of transmission modes on a terminal device side, to satisfy different service transmission requirements. To reduce implementation costs of the terminal device, a feasible implementation that is being explored is to "pool" a baseband processing capability on the terminal device side, that is, unitize the baseband processing capability on the terminal device side, and combine different capability units based on an actual transmission requirement to complete baseband signal processing. Baseband processing includes at least one of the following: channel estimation, equalization, channel encoding, channel decoding, symbol modulation, symbol demodulation, waveform modulation, waveform demodulation, source encoding, source decoding, or the like.

As used in the present disclosure, the term "transmission mode" may usually be a specific mode or configuration used for transmission, namely, a specific parameter or parameter combination used for transmission. For example, the "transmission mode" may be one or more parameters associated with a transmission capability (for example, a port capability and a bandwidth capability) on the terminal device side. Specifically, the transmission mode may be defined as different values of a transmission capability parameter. In this case, different values of a same transmission capability parameter correspond to different transmission modes, and different transmission capability parameters correspond to different transmission modes. Alternatively, the transmission mode may be defined as a combination of a plurality of transmission capability parameters, and capability parameter combinations corresponding to each transmission mode may be the same, but values are different.

Based on a protocol, the terminal device may report a supported carrier aggregation (carrier aggregation, CA) aggregation capability and a component carrier (component carrier, CC)-level signal processing capability. The CA aggregation capability includes a maximum number of downlink CCs that can be simultaneously activated, CC combinations that simultaneously perform data transmission, a maximum number of uplink CCs that can be simultaneously activated, and CC combinations that simultaneously perform data transmission. The CC-level signal processing capability includes a maximum downlink transmission capability of a single CC: a downlink transmission bandwidth, a maximum number of spatial domain layers supported for downlink data transmission ("maxNumberMIMO-LayersPDSCH"), and a number of downlink reception antenna ports; and a maximum uplink transmission capability of a single CC: a maximum uplink transmission bandwidth of a single CC, a maximum number of spatial domain layers supported for uplink data transmission ("maxNumberMIMO-LayersPDSCH"), and a number of uplink transmission antenna ports.

These reporting parameter combinations represent a maximum intermediate radio frequency receiving/sending capability and a maximum baseband processing capability on the terminal device side. For example, data transmission of four downlink CCs that can be supported, a maximum 100-MHz bandwidth per CC, and a maximum of four multiple-input multiple-output (multiple-input multiple-output, MIMO) layers indicates that the terminal device side can process a maximum of 400-MHz bandwidth and perform receiving and demodulation of four parallel layers of data.

However, for a maximum capability combination reported by the terminal device (for example, a carrier aggregation capability is a single CC, a maximum bandwidth of 100 MHz per CC, and four parallel layers), when network load is low, a user channel main path prevails, and an available spectrum of a system is 400 MHz, the terminal device side uses 100 MHz+1 layer for transmission. Because an actual number of transport layers of a user is less than a maximum number of layers that can be supported, there is a surplus in a baseband processing capability on the terminal device side, but this is limited by a reported maximum bandwidth, and a transmission rate on the terminal device side or a user-perceived rate is not maximized.

Some embodiments of the present disclosure provide a data transmission solution in which a bandwidth capability and a port capability are shared on a terminal device side. In this solution, a baseband processing capability between different combinations of a bandwidth and a port on the terminal device side is dynamically adjusted based on an actual service scheduling requirement, and a user transmission capacity or a user-perceived rate is maximized on a premise that the baseband processing capability of the terminal device is fixed.

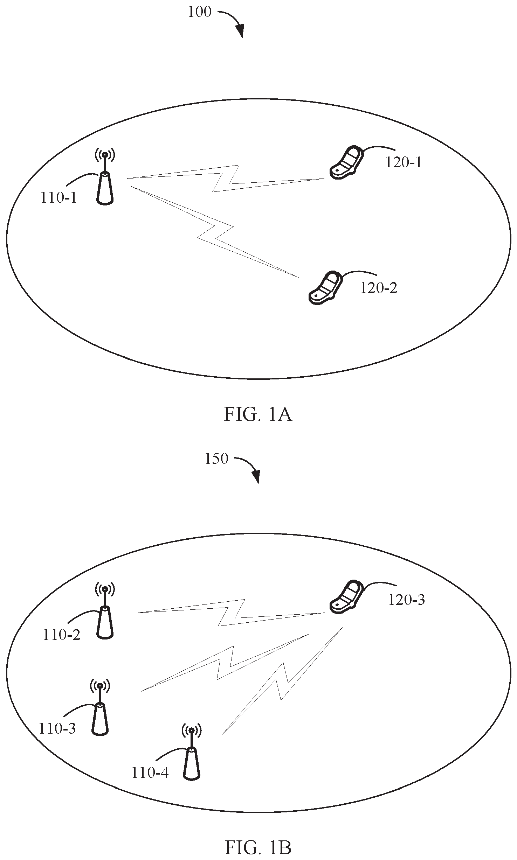

FIG. 1A is a diagram of a communication system 100 to which some embodiments of the present disclosure may be applied. For example, the communication system 100 is a mobile communication system, and includes a single network device 110-1 and a plurality of terminal devices 120-1 and 120-2. The single network device may transmit data or control signaling to one or more terminal devices.

FIG. 1B is a diagram of a communication system 150 to which some embodiments of the present disclosure may be applied. For example, the communication system 150 is a mobile communication system, and includes a plurality of network devices 110-2, 110-3, 110-4, and a single terminal device 120-3. The plurality of network devices may simultaneously transmit data or control signaling to the single terminal device.

It should be understood that the scenarios, numbers of devices, and connections between the devices shown in FIG. 1A and FIG. 1B are merely for the purpose of description, and do not imply any limitation. Embodiments of the present disclosure may be further applied to another possible scenario. In some embodiments, the network devices 110-1, 110-2, 110-3, and 110-4 may be collectively referred to as a network device 110 or a base station 110, and the terminal devices 120-1, 120-2, and 120-3 may be collectively referred to as a terminal device 120 or UE 120.

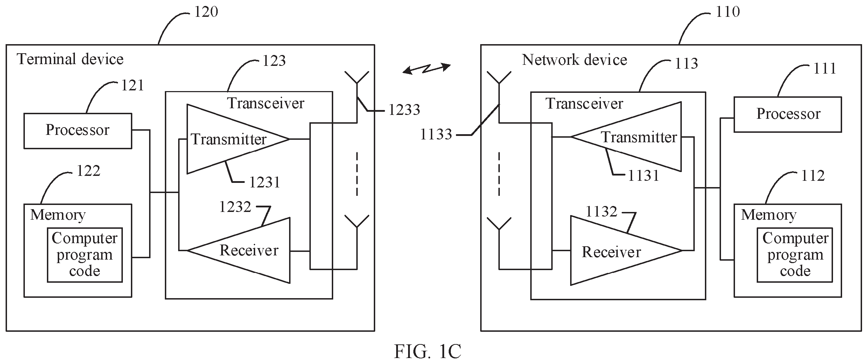

Communication between each network device and each terminal device in the communication systems shown in FIG. 1A and FIG. 1B may alternatively be represented in another form. As shown in FIG. 1C, the terminal device 120 includes a processor 121, a memory 122, and a transceiver 123. The transceiver 123 includes a transmitter 1231, a receiver 1232, and an antenna 1233. The network device 110 includes a processor 111, a memory 112, and a transceiver 113, and the transceiver 113 includes a transmitter 1131, a receiver 1132, and an antenna 1133. The receiver 1232 may be configured to receive transmission control information through the antenna 1233, and the transmitter 1231 may be configured to send transmission feedback information to the network device 110 through the antenna 1233. The transmitter 1131 may be configured to send the transmission control information to the terminal device 120 through the antenna 1133, and the receiver 1132 may be configured to receive, through the antenna 1133, the transmission feedback information sent by the terminal device 120.

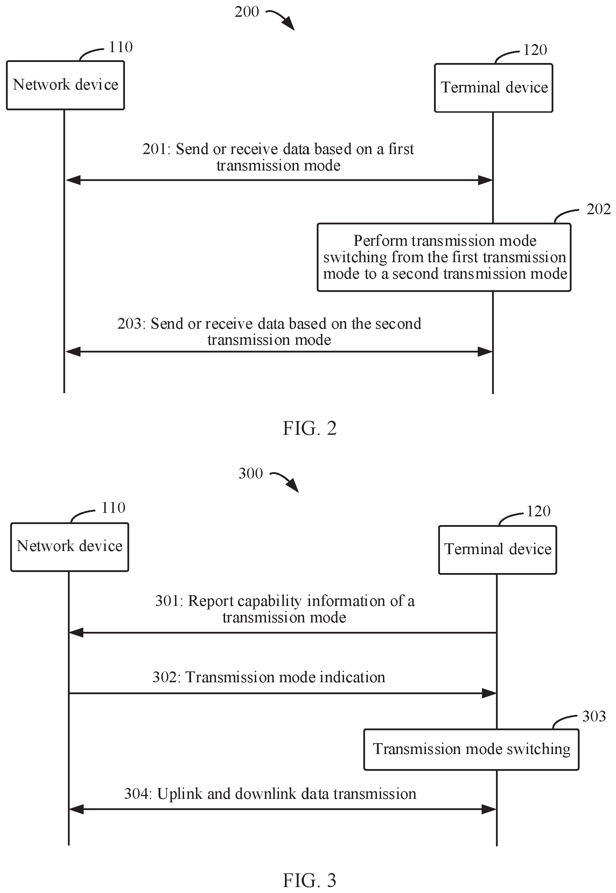

FIG. 2 is a signaling diagram of a communication process 200 according to some embodiments of the present disclosure. For ease of understanding, FIG. 2 is described with reference to FIG. 1A to FIG. 1C. For example, the network device 110 and the terminal device 120 may be used in the process 200.

Refer to FIG. 2. In 201, the network device 110 and the terminal device 120 may send and receive data based on a first transmission mode, where the first transmission mode corresponds to a first port capability and/or a first bandwidth capability. For example, the terminal device 120 may receive the data from the network device 110 or send the data to the network device 110 based on the first transmission mode. Correspondingly, the network device 110 may send the data to the terminal device 120 or receive the data from the terminal device 120 based on the first transmission mode of the terminal device 120.

The terminal device 120 performs transmission mode switching from the first transmission mode to a second transmission mode in 202, where the second transmission mode corresponds to a second port capability and/or a second bandwidth capability. Then, the network device 110 and the terminal device 120 may send and receive the data based on the second transmission mode. For example, the terminal device 120 may receive the data from the network device 110 or send the data to the network device 110 based on the second transmission mode. Correspondingly, the network device 110 may send the data to the terminal device 120 or receive the data from the terminal device 120 based on the second transmission mode of the terminal device 120.

In some embodiments, a port capability may be a number of ports that can be supported by the terminal device, and includes one or more of the following: a number of pilot ports, a number of data ports, a number of pilot layers, a number of data channel layers, a number of transmission antenna ports, a number of reception antenna ports, a number of transmission ports, a number of reception ports, or a connection relationship between a radio frequency chain and an antenna. The first port capability and the second port capability are one or more of the foregoing port capabilities, and parameters used by the first port capability and the second port capability are the same. For example, if the first port capability includes the number of transmission antenna ports, the second port capability also includes the number of transmission antenna ports.

In some embodiments, a bandwidth capability may be a bandwidth that can be supported by the terminal device, and includes one or more of the following: a single-carrier bandwidth, a multi-carrier aggregation bandwidth, a number of aggregated multi-carriers, a pilot signal bandwidth, a data channel bandwidth, an uplink bandwidth, a downlink bandwidth, or an operating bandwidth of a radio frequency chain. The first bandwidth capability and the second bandwidth capability are one or more of the foregoing bandwidth capabilities, and parameters used by the first bandwidth capability and the second bandwidth capability are the same. For example, if the first bandwidth capability includes the pilot signal bandwidth, the second bandwidth capability also includes the pilot signal bandwidth.

In some embodiments, a baseband processing capability of the terminal device may support switching between different bandwidths and different numbers of ports. For example, in an implementation, the terminal device may reduce numbers of reception and transmission ports, and support transmission with a larger bandwidth based on a saved processing capability. In another implementation, the terminal device may reduce a transmission bandwidth, and support transmission with a larger number of ports based on a saved processing capability.

In this case, the first bandwidth capability may be less than or equal to the second bandwidth capability when the first port capability is greater than or equal to the second port capability, or the first port capability may be less than or equal to the second port capability when the first bandwidth capability is greater than or equal to the second bandwidth capability.

In some embodiments, before performing the transmission mode switching, the terminal device 120 may send, to the network device 110, capability information supported by the terminal device 120, where the capability information indicates the port capability and/or the bandwidth capability.

Optionally, the capability information may further indicate whether the terminal device supports sharing of the bandwidth capability and the port capability, that is, whether the baseband processing capability of the terminal device can support switching between different bandwidths and different numbers of ports. Optionally, the capability information may further indicate a processing latency for switching between different capabilities. The parameter may represent a processing time required for switching the operating bandwidth by the terminal device, a processing time required for switching the connection relationship between the RF chain (radio frequency chain) and the physical antenna by the terminal device, a processing time required for switching the number of ports by the terminal device, or a processing time required for reconstructing the baseband processing capability by the terminal device. Optionally, the processing latency for switching between different capabilities may alternatively be reported separately. Optionally, the capability information may further indicate a capability conversion factor "a" between a bandwidth and a port. The capability parameter may represent that when the terminal device adjusts the bandwidth from A1 to A2, a number of ports that can be supported may be adjusted from B1 to B2, and a value of B2 is related to "a", A1, A2, and B1; or when the terminal device adjusts the number of ports from A1 to A2, the bandwidth that can be supported may be adjusted from B1 to B2, and a value of B2 is related to "a", A1, A2, and B1.

In some embodiments, the network device 110 may send a transmission mode indication to the terminal device 120, and the terminal device 120 may perform the transmission mode switching based on the transmission mode indication. For example, the transmission mode indication includes the second transmission mode to which the terminal device 120 is to switch, and optionally a time at which the second transmission mode takes effect. Then, the terminal device 120 may switch from the first transmission mode to the second transmission mode.

In an implementation, the network device may determine, based on the capability information reported by the terminal device, the transmission mode that can be supported by the terminal device, and determine, based on a real-time scheduling requirement, the transmission mode to which the terminal device is to switch.

A trigger event for sending the transmission mode indication by the network device may be one or more of the following: After the terminal device successfully performs initial access, the network device configures a default transmission mode for the terminal device; the network device determines, based on a real-time service scheduling requirement, to switch the transmission mode of the terminal device, that is, switch from one transmission mode to another transmission mode; the network device makes a decision, based on information reported by the terminal device (for example, the terminal device reports that power is insufficient and an energy saving mode needs to be enabled), to switch the transmission mode of the terminal device, that is, switch from one transmission mode to another transmission mode; and the network device makes a decision, based on a channel environment of the terminal device (for example, in a case of rich multipath, a maximum number of ports are used to implement higher layer transmission; or in a case in which a main path prevails, a smaller number of ports are used for lower layer transmission), to switch the transmission mode of the terminal device, that is, switch from one transmission mode to another transmission mode.

In some embodiments, the network device may send the transmission mode indication to the terminal device by using RRC signaling. Optionally, the network device may send the transmission mode indication to the terminal device by using BWP configuration information. Optionally, the network device may send the transmission mode indication to the terminal device by using serving cell configuration information.

In an implementation, the network device configures one transmission mode for each BWP on each CC by using RRC signaling, and BWP switching implicitly indicates the terminal device to receive and send data or a pilot based on the transmission mode associated with the BWP.

In another implementation, the network device configures a plurality of transmission modes for each BWP on each CC by using RRC signaling, and dynamically activates one of the transmission modes for each BWP by using a medium access control-control element (medium access control-control element, MAC-CE). After receiving activation signaling, the terminal device performs transmission mode switching, and subsequently receives and sends data or a pilot based on a new transmission mode after the switching.

Optionally, after receiving BWP-level transmission mode activation signaling, the terminal device performs transmission mode switching. After the switching succeeds, the terminal device sends acknowledgement (acknowledgement, ACK) information to the network device, so that the terminal device and the network device have a consistent understanding of a moment at which a new transmission mode (namely, the second transmission mode) takes effect.

In another implementation, the network device configures a plurality of transmission modes for each BWP on each CC by using RRC signaling, dynamically activates the plurality of transmission modes for each BWP by using a MAC-CE, and selects, by using DCI signaling, one of the plurality of transmission modes activated by using the MAC-CE and indicates the transmission mode to the terminal device.

In another implementation, the network device configures a plurality of transmission modes for each CC by using RRC signaling, dynamically activates one of the transmission modes for each CC by using a MAC-CE, and receives and sends, based on the transmission mode, data or a pilot scheduled by the CC.

Optionally, after receiving CC-level transmission mode activation signaling, the terminal device performs transmission mode switching. After the switching succeeds, the terminal device sends ACK information to the network device, so that the terminal device and the network device have a consistent understanding of a moment at which a new transmission mode takes effect.

In another implementation, the network device configures a plurality of transmission modes for each CC by using RRC signaling, dynamically activates the plurality of transmission modes for each CC by using a MAC-CE, and selects, by using DCI signaling, one of the plurality of transmission modes activated by using the MAC-CE and indicates the transmission mode to the terminal device.

Optionally, after receiving BWP-level or CC-level transmission mode activation signaling, the terminal device performs transmission mode switching. After the switching succeeds, the terminal device sends ACK information to the network device, so that the terminal device and the network device have a consistent understanding of a moment at which a new transmission mode (namely, the second transmission mode) takes effect.

Optionally, after receiving BWP-level or CC-level transmission mode activation signaling, the terminal device performs transmission mode switching. After the switching succeeds, the terminal device does not send any information to the network device, and receives or sends a signal based on a new transmission mode at a predetermined time, so that the terminal device and the network device have a consistent understanding of a moment at which the new transmission mode (namely, the second transmission mode) takes effect. For example, the terminal device receives the activation signaling at a moment n, and receives or sends the signal based on the new transmission mode after a moment n+T; and receives or sends the signal based on an old transmission mode in a time period between the moment n and the moment n+T, or stops any receiving and sending behavior of the terminal device in the period between the moment n and the moment n+T.

In some embodiments, the network device may send the transmission mode indication to the terminal device by using SCell activation signaling.

In an implementation, the SCell activation signaling does not explicitly carry the transmission mode indication, and the terminal device implicitly obtains new transmission mode indication information based on an operating bandwidth after an SCell is activated, performs transmission mode switching and SCell activation, and after the SCell is successfully activated, performs data receiving and sending based on the indicated transmission mode. For example, if a downlink reception bandwidth of the terminal device is 100 M, a maximum number of transport layers that can be supported by a PDSCH is four; or if the downlink reception bandwidth of the terminal device is 200 M, the maximum number of transport layers that can be supported by the PDSCH is 2. In this case, when the terminal device operates on only a single CC, a system bandwidth of the CC is 100 M, and the terminal device uses four ports. When the network device activates a secondary CC for the terminal device, and a system bandwidth of the secondary CC is 100 M, after receiving the SCell activation signaling, the terminal device needs to switch from a transmission mode of "bandwidth 100 M+a number 4 of ports" to a transmission mode of "bandwidth 200 M+a number 2 of ports".

In another implementation, the SCell activation signaling carries the transmission mode indication, and the terminal device performs SCell activation based on the indicated transmission mode, and after an SCell is successfully activated, performs data receiving and sending based on the indicated transmission mode.

Optionally, an SCell activation process includes one or more of the following behaviors implemented in the indicated transmission mode: transmission mode switching, beam measurement of a to-be-activated SCell, channel state information measurement of the to-be-activated SCell, beam measurement of an activated CC based on a new transmission mode, and channel state information measurement of the activated CC based on the new transmission mode.

Optionally, the SCell activation further includes one or more of the following information reported based on the indicated transmission mode: measurement information of the to-be-activated SCell, measurement information of the activated CC, and indication information indicating that transmission mode switching is successful.

Optionally, the terminal device receives, at the moment n, the SCell activation signaling sent by the network device. If the network device receives valid channel state information of the SCell before the moment n+T1, it is considered that SCell activation succeeds and transmission mode switching succeeds; otherwise, it is considered that SCell activation or transmission mode switching fails. A specific definition of T1 needs to consider a processing time required by the terminal device to perform the transmission mode switching.

Optionally, if the transmission mode indicated by the terminal device is different from a transmission mode used before the SCell activation signaling is received, and the transmission mode switching of the terminal device does not succeed, the SCell activation fails.

In some embodiments, the network device may send the transmission mode indication to the terminal device by using SCell deactivation signaling.

In an implementation, the SCell deactivation signaling does not explicitly carry the transmission mode indication, and the terminal device implicitly obtains new transmission mode indication information based on an operating bandwidth after an SCell is deactivated, performs transmission mode switching and SCell deactivation, and after the SCell is successfully deactivated, performs data receiving and sending based on the indicated transmission mode. For example, if a downlink reception bandwidth of the terminal device is 100 M, a maximum number of transport layers that can be supported by a PDSCH is four; or if the downlink reception bandwidth of the terminal device is 200 M, the maximum number of transport layers that can be supported by the PDSCH is 2. In this case, when the terminal device operates on only two CCs, and a system bandwidth of each CC is 100 M, the terminal device uses two ports. When the network device deactivates a secondary CC for the terminal device, after receiving the SCell deactivation signaling, the terminal device needs to switch from a transmission mode of "bandwidth 200 M+a number 2 of ports" to a transmission mode of "bandwidth 100 M+a number 4 of ports".

In another implementation, the SCell deactivation signaling carries the transmission mode indication, and the terminal device performs SCell deactivation based on the indicated transmission mode, and after an SCell is successfully deactivated, performs data receiving and sending based on the indicated transmission mode.

Optionally, if the transmission mode indicated by the terminal device is different from a transmission mode used before the SCell activation signaling is received, and the transmission mode switching of the terminal device does not succeed, it is considered that the SCell deactivation succeeds, and the terminal device reports, to the network device, information indicating that transmission mode switching does not succeed.

In some embodiments, the behavior of performing the transmission mode switching by the terminal device may include one or more of the following behaviors: changing an operating port of the terminal device, changing the operating bandwidth of the terminal device, or changing the baseband processing capability of the terminal device. For example, changing the operating port of the terminal device includes switching from one port capability to another port capability, and changing the operating bandwidth of the terminal device includes switching from one bandwidth capability to another bandwidth capability.

In some embodiments, before performing the transmission mode switching, the terminal device 120 may send a transmission mode switching request to the network device 110. Optionally, before performing the transmission mode switching, the terminal device sends the transmission mode switching request to the network device, and performs the transmission mode switching after being allowed by the network device. Optionally, before performing the transmission mode switching, the terminal device sends the transmission mode switching request to the network device. If the network device does not allow the terminal device to perform the transmission mode switching, the terminal device does not perform the transmission mode switching.

In some embodiments, the terminal device may send the transmission mode switching request through a PRACH, or send the transmission mode switching request through a PUSCH, or send the transmission mode switching request through a PUCCH.

In some embodiments, the transmission mode switching request includes one or more of the following: an uplink resource request used to report the second transmission mode, a reason why the terminal device performs the transmission mode switching, an indication of the second transmission mode after the switching, or a transmission mode switching guard interval. The foregoing reason for the transmission mode switching in the transmission mode switching request may be a direct reason, or may be a classified reason, for example, a reason on a terminal device side or a reason on a network device side.

In some embodiments, a trigger condition for sending the transmission mode switching request by the terminal device to the network device includes one or more of the following: an energy saving requirement of the terminal device changes; channel quality of the terminal device changes; service load of the network device changes; a to-be-transmitted service volume of the terminal device changes; or a channel feature of the terminal device changes.

In some embodiments, after performing the transmission mode switching, the terminal device may send, to the network device, a message indicating that the transmission mode switching has been completed, where the message indicating that the transmission mode switching has been completed may include one or more of the following: whether the transmission mode switching is completed, a reason why the terminal device performs the transmission mode switching, and an indication of the second transmission mode after the switching. The foregoing reason for the transmission mode switching in the message indicating that the transmission mode switching has been completed may be a direct reason, or may be a classified reason, for example, a reason on a terminal device side or a reason on a network device side.

The foregoing reference process 200 describes the solutions according to some embodiments of the present disclosure. In the solutions, the network device may dynamically change a transmission bandwidth and numbers of reception and transmission antennas of the terminal device based on a real-time service requirement. When the service volume is small, a part of radio frequency channels are disabled, or a baseband signal processing requirement is reduced, to save energy of the terminal device. When a main path prevails and the service volume is large, a part of antennas are disabled, and a transmission bandwidth is increased, to implement high-capacity transmission. The terminal device may dynamically disable a part of transmission or reception channels, to reduce power consumption of the terminal device; or the terminal device may dynamically enable more transmission or reception channels, to implement higher-rate transmission, thereby improving a user-perceived rate.

Usually, a maximum operating bandwidth and numbers of uplink and downlink antenna ports of the user are reported to a base station in an initial access phase. After initial access is completed, the maximum operating bandwidth and the numbers of uplink and downlink antenna ports of the user are fixed. However, according to the solutions in some embodiments of the present disclosure, the terminal device may dynamically switch an operating bandwidth and change numbers of uplink and downlink antenna ports in a fixed capability resource pool, thereby implementing performance requirements of power consumption and a capacity of the terminal device in different channel environments.

FIG. 3 is a signaling diagram of another communication process 300 according to some embodiments of the present disclosure. The process 300 may be an example implementation of the process 200 shown in FIG. 2. Similar to those in the process 200, the network device 110 and the terminal device 120 may be used in the process 300.

Refer to FIG. 3. In 301, the terminal device 120 reports capability information of a transmission mode, that is, the terminal device 120 reports the supported capability information to the network device 110.

Optionally, the capability information may include a parameter 1: whether the terminal device supports sharing of a bandwidth capability and a port capability. The capability parameter represents whether a baseband processing capability of the terminal device can support switching between different bandwidths and different numbers of ports. For example, in an implementation, the terminal device reduces numbers of reception and transmission ports, and supports transmission with a larger bandwidth based on a saved processing capability. In an implementation, the terminal device reduces a transmission bandwidth, and supports transmission with a larger number of ports based on a saved processing capability.

Optionally, the capability information may include a parameter 2: a number of ports that can be supported by the terminal device. The capability parameter may represent a number of SRS transmission ports, a maximum number of MIMO layers in downlink PDSCH transmission, a number of transmission ports in downlink channel state information-reference signal (channel state information-reference signal, CSIRS) transmission, or a maximum number of MIMO layers in PUSCH transmission.

Optionally, the capability information may include a parameter 3: a bandwidth that can be supported by the terminal device. The capability parameter may represent a maximum single-carrier uplink transmission bandwidth, a maximum single-carrier downlink transmission bandwidth, an uplink multi-carrier aggregation bandwidth, a downlink multi-carrier aggregation bandwidth, a number of downlink aggregated multi-carriers, a number of uplink aggregated multi-carriers, a maximum pilot signal transmission bandwidth, a maximum data channel transmission bandwidth, or the like.

Optionally, the capability information may include a parameter 4: a processing latency for switching between different transmission capabilities. The capability parameter may represent a processing time required for switching an operating bandwidth by the terminal device, a processing time required for switching a connection relationship between a radio frequency chain and a physical antenna by the terminal device, a processing time required for switching a number of ports by the terminal device, a processing time required for reconstructing a baseband processing capability by the terminal device, or the like.

Optionally, the capability information may include a parameter 5: a capability conversion factor "a" between a bandwidth and a port. The capability parameter may represent that when the terminal device adjusts the bandwidth from A1 to A2, a number of ports that can be supported may be adjusted from B1 to B2, and a value of B2 is related to "a", A1, A2, and B1; or when the terminal device adjusts the number of ports from A1 to A2, the bandwidth that can be supported may be adjusted from B1 to B2, and a value of B2 is related to "a", A1, A2, and B1.

In some embodiments, the bandwidth may be a single-carrier bandwidth, a multi-carrier aggregation bandwidth, a downlink bandwidth, an uplink bandwidth, or the like. The port may be a pilot port, a data port, a number of downlink MIMO layers, a number of uplink MIMO layers, an antenna port, a transmission port, a reception port, a transmission antenna port, a reception antenna port, or the like. The connection relationship between the radio frequency chain and the physical antenna of the terminal device may be an antenna structure using DBF, HBF, analog beamforming (analog beamforming, ABF), or the like. The data channel may be one or more of the following signals: a PUCCH, a physical downlink control channel (PDCCH), a PUSCH, a PDSCH, or the like. The pilot signal may be one or more of the following signals: a CSIRS, a synchronization signal and physical broadcast channel block (synchronization signal and physical broadcast channel (PBCH) block, SSB), a demodulation reference signal (demodulation reference signal, DMRS), a tracking reference signal (tracking reference signal, TRS), a phase tracking reference signal (phase tracking reference signal, PTRS), an SRS, a cell reference signal (cell reference signal, CRS), or the like.

In some embodiments, a transmission capability parameter reported by the terminal device may be a plurality of parameter combinations or a plurality of values of one parameter. The plurality of parameter combinations are one transmission capability, and different transmission capabilities correspond to different values of a same parameter combination. The terminal device may report a plurality of values of the plurality of parameter combinations, to represent a plurality of transmission capabilities that can be supported by the terminal device.

In some embodiments, the capability information of the transmission mode may be reported by using RRC signaling, a MAC-CE, uplink control information (uplink control information, UCI), a PUCCH, and/or a PUSCH.

Still refer to FIG. 3. In 302, the network device 110 delivers a transmission mode indication to the terminal device 120. Specifically, the transmission mode is associated with the transmission capability parameter reported by the terminal device. For example, the network device determines, based on a value of the transmission capability parameter reported by the terminal device, the transmission mode that can be supported by the terminal device, and determines, based on a real-time scheduling requirement, the transmission mode to which the terminal device is to switch.

In an implementation, the transmission mode is defined as different values of the transmission capability parameter. In this case, different values of a same transmission capability parameter correspond to different transmission modes, and different transmission capability parameters correspond to different transmission modes. Table 2 shows an example transmission mode table. Different transmission modes correspond to different values of the number of ports.

**Table 2**

| Transmission mode | Transmission capability parameter | Value of the capability parameter |
|---|---|---|
| #1 | Number of ports | 4 |
| #2 | Number of ports | 2 |

The terminal device reports the port capability that can be supported, and dynamically switches a number of downlink reception ports or a number of uplink transmission ports of the terminal device based on factors such as a real-time service requirement, a channel environment characteristic, or a terminal energy saving requirement.

Optionally, when the terminal device has sufficient power, the terminal device receives downlink data by using a transmission mode #1. In this case, the terminal device receives a downlink signal through four antenna ports in a manner of digital beamforming, hybrid beamforming, or analog beamforming, and a baseband needs to process the signal received through the four antenna ports. When the terminal device enables an energy saving mode, the terminal device receives downlink data by using a transmission mode #2. In this case, the terminal device receives a downlink signal through two antenna ports in a manner of digital beamforming, hybrid beamforming, or analog beamforming, and the baseband needs to process the signal received through the two antenna ports. Therefore, some additional processing units may be disabled, to reduce power consumption.

Optionally, in the transmission mode #1 and the transmission mode #2, a same reception or transmission antenna set is used, but connection relationships between corresponding radio frequency chains and antennas are different. For example, the terminal device has four antennas and four radio frequency chains. In the transmission mode #1, four radio frequency chains are used to receive or send a signal in a manner of digital beamforming, where each radio frequency chain is associated with one antenna. In the transmission mode #2, two radio frequency chains are used to receive or send a signal in a manner of hybrid beamforming, where each radio frequency chain is associated with two antennas.

Optionally, in the transmission mode #1 and the transmission mode #2, different reception or transmission antenna sets are used, and the reception or transmission antenna set in the transmission mode #2 is a subset of the reception or transmission antenna in the transmission mode #1. For example, the terminal device has four antennas and four radio frequency chains, and each radio frequency chain is connected to one antenna. In the transmission mode #1, four radio frequency chains are used to receive or send a signal in a manner of digital beamforming. In the transmission mode #2, two radio frequency chains in the four radio frequency chains and two antennas corresponding to the radio frequency chains are used to receive or send a signal in a manner of digital beamforming.

Optionally, a connection relationship between a radio frequency chain and an antenna may not be explicitly defined in a protocol text, but the connection relationship between the radio frequency chain and the physical antenna is implicitly described by using a number of antenna ports. For example, when a maximum number of pilot resources that are reported by the terminal device and that are used for beam management (a capability reporting parameter "maxNumberSRS-ResourcePerSet-BM") is greater than 1, it is considered that the connection relationship between the radio frequency chain and the antenna of the terminal device is that one radio frequency chain is associated with a plurality of physical antennas, and a signal may be received or sent in a manner of hybrid beamforming or analog beamforming.

In an implementation, the transmission mode is defined as different values of the transmission capability parameter. In this case, different values of a same transmission capability parameter correspond to different transmission modes, and different transmission capability parameters correspond to different transmission modes. Table 3 shows another example transmission mode table. Different transmission modes correspond to different values of the bandwidth.

**Table 3**

| Transmission mode | Transmission capability parameter | Value of the capability parameter |
|---|---|---|
| #1 | Bandwidth | 100 MHz |
| #2 | Bandwidth | 200 MHz |

The terminal device reports the bandwidth capability that can be supported, and dynamically switches a number of downlink reception bandwidths or a number of uplink transmission bandwidths of the terminal device based on factors such as a real-time service requirement, a channel environment characteristic, or a terminal energy saving requirement.

Optionally, when the terminal device has sufficient power, the transmission mode #2 in Table 2 is used to receive downlink data. In this case, a signal receiving or sending bandwidth capability of the antenna port needs to be adjusted to be greater than or equal to 200 MHz, and a baseband signal processing capability needs to be adjusted to support operations such as data receiving, channel estimation, data demodulation, or decoding corresponding to the 200-MHz bandwidth. When the terminal device enables the energy saving mode, the transmission mode #1 in Table 2 is used. In this case, the antenna port only needs to have a 100-MHz signal receiving capability, and the baseband needs to process only operations such as data receiving, channel estimation, data demodulation, or decoding corresponding to the 100-MHz bandwidth. Therefore, some additional processing units may be disabled, thereby reducing power consumption.

Optionally, in different transmission modes, the terminal device uses a same reception or transmission antenna port set, but numbers of reception or transmission antenna ports corresponding to a same bandwidth in different transmission modes are different; and the network device does not need to sense that the numbers of reception or transmission antenna ports corresponding to the same bandwidth in different transmission modes are different. For example, the terminal device has four antenna ports, and a signal receiving bandwidth capability of each antenna port in the transmission mode #1 and the transmission mode #2 is 100 MHz. In the transmission mode #1, four antenna ports are used to receive or send a 100-MHz bandwidth signal, where all antenna ports receive or send a same 100-MHz bandwidth. In the transmission mode #1, four antenna ports are used to receive or send a 100-MHz bandwidth signal, where an antenna port #1 and an antenna port #2 receive or send a same 100-MHz bandwidth, an antenna port #3 and an antenna port #4 receive or send a same 100-MHz bandwidth, and the antenna port #1 and the antenna port #3 receive or send different 100-MHz bandwidths.

Optionally, in the transmission mode #1 and the transmission mode #2, different numbers of reception or transmission antenna ports are used, and the reception or transmission antenna port used in the transmission mode #2 is a subset of the reception or transmission antenna port used in the transmission mode #1. For example, the terminal device has four antenna ports, and a signal receiving or sending bandwidth capability of each antenna port is 200 MHz. In the transmission mode #1, four antenna ports are used to receive or send a same 100-MHz bandwidth. In the transmission mode #2, two antenna ports in the four antenna ports are used to receive or send a same 200-MHz bandwidth signal.

Optionally, in the transmission mode #1 and the transmission mode #2, a same reception or transmission antenna set is used, but connection relationships between corresponding radio frequency chains and antennas are different. For example, the terminal device has four physical antennas and four radio frequency chains. In the transmission mode #1, four radio frequency chains are used, and each radio frequency chain receives or sends a same 100-MHz bandwidth signal in a manner of digital beamforming, where each radio frequency chain is associated with one antenna. In the transmission mode #2, two radio frequency chains are used, and each radio frequency chain receives or sends a same 200-MHz bandwidth signal in a manner of hybrid beamforming, where each radio frequency chain is associated with two physical antennas.

Optionally, in the transmission mode #1 and the transmission mode #2, different reception or transmission antenna sets are used, and the reception or transmission antenna set in the transmission mode #2 is a subset of the reception or transmission antenna in the transmission mode #1. For example, the terminal device has four antennas and four radio frequency chains, each radio frequency chain is connected to one antenna, and a signal receiving or sending bandwidth capability of each radio frequency chain is 200 MHz. In the transmission mode #1, four radio frequency chains are used to receive or send a same 100-MHz bandwidth signal in a manner of digital beamforming. In the transmission mode #2, two radio frequency chains in the four radio frequency chains and two antennas corresponding to the radio frequency chains are used to receive or send a same 200-MHz bandwidth signal in a manner of digital beamforming.

Optionally, a connection relationship between a radio frequency chain and a physical antenna may not be explicitly defined in a protocol text, but the connection relationship between the radio frequency chain and the physical antenna is implicitly described by using a number of antenna ports. For example, when a maximum number of pilot resources that are reported by the terminal device and that are used for beam management (a capability reporting parameter "maxNumberSRS-ResourcePerSet-BM") is greater than 1, it is considered that the connection relationship between the radio frequency chain and the physical antenna of the terminal device is that one radio frequency chain is associated with a plurality of physical antennas, and a signal may be received or sent in a manner of hybrid beamforming or analog beamforming.

In an implementation, the transmission mode is defined as different values of a plurality of transmission capability parameter combinations, and each transmission mode corresponds to a same capability parameter combination, but at least one parameter has a different value. Table 4 shows another example transmission mode table. Different transmission modes correspond to different values of the number of ports and the bandwidth combination.

**Table 4**

| Transmission mode | Number of ports | Bandwidth |
|---|---|---|
| #1 | 4 | 100 MHz |
| #2 | 4 | 200 MHz |
| #3 | 8 | 50 MHz |
| #4 | 2 | 400 MHz |

Optionally, when multipath channel environments of the terminal device are rich and network load is large, a transmission bandwidth that can be allocated to each user is limited. In this case, more port services may be used to increase a number of air interface transport layers of the user, thereby improving a user-perceived rate. For example, downlink data may be received in a transmission mode #3 in Table 3. When a channel environment main path of the terminal device prevails and network service load is small, a transmission bandwidth that can be allocated to each user is not limited. In this case, a number of serving ports may be reduced, and a larger bandwidth may be used to transmit data for the user. For example, downlink data may be received in the transmission mode #4 in Table 3.

Optionally, reception or transmission antenna port sets used in different transmission modes are different, and a reception or transmission bandwidth of a specific transmission mode is only a subset of a reception or transmission bandwidth of another transmission mode, or a reception or transmission antenna port of a specific transmission mode is only a subset of a reception or transmission antenna port of another transmission mode. For example, the terminal device has eight antenna ports, and a signal receiving or sending bandwidth capability of each antenna port is 400 MHz. In the transmission mode #1, four antenna ports in the eight antenna ports are used to receive or send a same 100-MHz bandwidth signal. In the transmission mode #2, four antenna ports in the eight antenna ports are used to receive or send a same 200-MHz bandwidth signal. In the transmission mode #3, eight antenna ports are used to receive or send a same 50-MHz bandwidth signal. In the transmission mode #4, two antenna ports in the eight antenna ports are used to receive or send a same 50-MHz bandwidth signal.

Optionally, different transmission modes use a same reception or transmission antenna port set. For example, the terminal device has eight antenna ports, and a signal receiving or sending bandwidth capability of each antenna port is 100 MHz. In the transmission mode #1, an antenna port #1, an antenna port #2, an antenna port #3, and an antenna port #4 are used to receive or send a first 50-MHz bandwidth signal, and an antenna port #5, an antenna port #6, an antenna port #7, and an antenna port #8 are used to receive or send a second 50-MHz bandwidth signal. In the transmission mode #2, the antenna port #1, the antenna port #2, the antenna port #3, and the antenna port #4 are used to receive or send a first 100-MHz bandwidth signal, and the antenna port #5, the antenna port #6, the antenna port #7, and the antenna port #8 are used to receive or send a second 100-MHz bandwidth signal. In the transmission mode #3, eight antenna ports are used to receive or send a same 50-MHz bandwidth signal. In the transmission mode #4, the antenna port #1 and the antenna port #2 are used to receive or send a first 100-MHz bandwidth signal, the antenna port #3 and the antenna port #4 are used to receive or send a second 100-MHz bandwidth signal, the antenna port #4 and the antenna port #5 are used to receive or send a third 100-MHz bandwidth signal, and the antenna port #6 and the antenna port #7 are used to receive or send a fourth 100-MHz bandwidth signal.

Optionally, different transmission modes use a same reception or transmission antenna set, but connection relationships between corresponding radio frequency chains and antennas are different. For example, the terminal device has eight antennas and eight radio frequency chains. In the transmission mode #1, four radio frequency chains are used, and each radio frequency chain receives or sends a same 100-MHz bandwidth signal in a manner of analog beamforming, where each radio frequency chain is associated with two antennas. In the transmission mode #2, four radio frequency chains are used, and each radio frequency chain receives or sends a same 200-MHz bandwidth signal in a manner of hybrid beamforming, where each radio frequency chain is associated with two antennas. In the transmission mode #3, eight radio frequency chains are used to receive or send a same 200-MHz bandwidth signal, where each radio frequency chain is associated with one antenna. In the transmission mode #4, two radio frequency chains are used to receive or send a same 400-MHz bandwidth signal, where each radio frequency chain is associated with four antennas.

Optionally, reception or transmission antenna sets used in different transmission modes are different, and a reception or transmission antenna of a specific transmission mode is only a subset of a reception or transmission antenna of another transmission mode. For example, the terminal device has eight antennas and eight radio frequency chains, each radio frequency chain is connected to one antenna, and a signal receiving or sending bandwidth capability of each radio frequency chain is 400 MHz. In the transmission mode #1, four radio frequency chains in the eight radio frequency chains and associated antennas are used to receive or send a same 100-MHz bandwidth signal. In the transmission mode #3, eight radio frequency chains and associated antennas are used to receive or send a same 50-MHz bandwidth signal.

Optionally, a connection relationship between a radio frequency chain and a physical antenna may not be explicitly defined in a protocol text, but the connection relationship between the radio frequency chain and the physical antenna is implicitly described by using a number of antenna ports. For example, when a maximum number of pilot resources that are reported by the terminal device and that are used for beam management (a capability reporting parameter "maxNumberSRS-ResourcePerSet-BM") is greater than 1, it is considered that the connection relationship between the radio frequency chain and the physical antenna of the terminal device is that one radio frequency chain is associated with a plurality of physical antennas, and a signal may be received or sent in a manner of hybrid beamforming or analog beamforming.

Optionally, in the transmission mode #1, the transmission mode #2, the transmission mode #3, and the transmission mode #4, a same reception or transmission physical antenna set is used, but connection relationships between corresponding radio frequency chains and antennas are different. For example, the terminal device has eight physical antennas. In the transmission mode #1 and the transmission mode #2, hybrid beamforming is used, and each radio frequency chain is associated with two physical antennas. In the transmission mode #3, digital beamforming is used, and each radio frequency chain is associated with one physical antenna. In the transmission mode #4, hybrid beamforming is used, and each radio frequency chain is associated with four physical antennas.

Optionally, a correspondence between an antenna port and a radio frequency chain may be that one antenna port corresponds to a plurality of radio frequency chains, or one antenna port corresponds to one radio frequency chain, or a plurality of antenna ports correspond to one or more same radio frequency chains, or different antenna ports correspond to a same radio frequency chain, or radio frequency chains corresponding to different antenna ports are partially the same. A correspondence between an antenna port and an antenna may be that one antenna port corresponds to a plurality of antennas, or one antenna port corresponds to one antenna, or different antenna ports correspond to a same antenna set, or antennas corresponding to different antenna ports are partially the same. A correspondence between a radio frequency chain and an antenna may be that one radio frequency chain corresponds to one antenna, or one radio frequency chain corresponds to a plurality of antennas, or different radio frequency chains correspond to a same antenna set, or antennas corresponding to different radio frequency chains are partially the same.

Optionally, the transmission mode may be further divided into a downlink transmission mode and an uplink transmission mode. The downlink transmission mode indicates a downlink receiving behavior of the terminal device, and the uplink transmission mode indicates an uplink sending behavior of the terminal device. Optionally, the uplink transmission mode and the downlink transmission mode may be a combined set, or may be separately defined.

In some embodiments, a trigger event for delivering the transmission mode indication by the network device may include one or more of the following events: Event 1: After the terminal device successfully performs initial access, the network device configures a default transmission mode for the terminal device. Event 2: The network device determines, based on a real-time service scheduling requirement, to switch the transmission mode of the terminal device, that is, switch from one transmission mode to another transmission mode. Event 3: The network device determines, based on information reported by the terminal device (for example, the terminal device reports that power is insufficient and an energy saving mode needs to be enabled), to switch the transmission mode of the terminal device, that is, switch from one transmission mode to another transmission mode. Event 4: The network device determines, based on a channel environment of the terminal device (for example, in a case of rich multipath, a maximum number of ports are used to implement higher layer transmission; or in a case in which a main path prevails, a smaller number of ports are used for lower layer transmission), to switch the transmission mode of the terminal device, that is, switch from one transmission mode to another transmission mode.

The following specifically describes a manner in which the network device delivers the transmission mode indication.

In an implementation, the network device configures one transmission mode for each BWP on each CC by using RRC signaling, and BWP switching implicitly indicates the terminal device to receive and send data or a pilot based on the transmission mode associated with the BWP.

In another implementation, the network device configures a plurality of transmission modes for each BWP on each CC by using RRC signaling, and dynamically activates one of the transmission modes for each BWP by using a MAC-CE. After receiving activation signaling, the terminal device performs transmission mode switching, and subsequently receives and sends data or a pilot based on a new transmission mode after the switching.

Optionally, after receiving BWP-level transmission mode activation signaling, the terminal device performs transmission mode switching. After the switching succeeds, the terminal device sends ACK information to the network device, so that the terminal device and the network device have a consistent understanding of a moment at which a new transmission mode takes effect.

In another implementation, the network device configures a plurality of transmission modes for each BWP on each CC by using RRC signaling, dynamically activates the plurality of transmission modes for each BWP by using a MAC-CE, and selects, by using DCI signaling, one of the plurality of transmission modes activated by using the MAC-CE and indicates the transmission mode to the terminal device.

In another implementation, the network device configures a plurality of transmission modes for each CC by using RRC signaling, dynamically activates one of the transmission modes for each CC by using a MAC-CE, and receives and sends, based on the transmission mode, data or a pilot scheduled by the CC.

Optionally, after receiving CC-level transmission mode activation signaling, the terminal device performs transmission mode switching. After the switching succeeds, the terminal device sends ACK information to the network device, so that the terminal device and the network device have a consistent understanding of a moment at which a new transmission mode takes effect.

In another implementation, the network device configures a plurality of transmission modes for each CC by using RRC signaling, dynamically activates the plurality of transmission modes for each CC by using a MAC-CE, and selects, by using DCI signaling, one of the plurality of transmission modes activated by using the MAC-CE and indicates the transmission mode to the terminal device.

Optionally, after receiving BWP-level or CC-level transmission mode activation signaling, the terminal device performs transmission mode switching. After the switching succeeds, the terminal device sends ACK information to the network device, so that the terminal device and the network device have a consistent understanding of a moment at which a new transmission mode (namely, the second transmission mode) takes effect.

Optionally, after receiving BWP-level or CC-level transmission mode activation signaling, the terminal device performs transmission mode switching. After the switching succeeds, the terminal device does not send any information to the network device, and receives or sends a signal based on a new transmission mode at a predetermined time, so that the terminal device and the network device have a consistent understanding of a moment at which the new transmission mode (namely, the second transmission mode) takes effect. For example, the terminal device receives the activation signaling at a moment n, and receives or sends the signal based on the new transmission mode after a moment n+T; and receives or sends the signal based on an old transmission mode in a time period between the moment n and the moment n+T, or stops any receiving and sending behavior of the terminal device in the period between the moment n and the moment n+T.

In another implementation, the SCell activation signaling carries the transmission mode indication, and the terminal device performs SCell activation based on the indicated transmission mode, and after an SCell is successfully activated, performs data receiving and sending based on the indicated transmission mode.

In another implementation, the SCell activation signaling does not explicitly carry the transmission mode indication, and the terminal device implicitly obtains new transmission mode indication information based on an operating bandwidth after an SCell is activated, performs transmission mode switching and SCell activation, and after the SCell is successfully activated, performs data receiving and sending based on the indicated transmission mode. For example, if a downlink reception bandwidth of the terminal device is 100 M, a maximum number of transport layers that can be supported by a PDSCH is four; or if the downlink reception bandwidth of the terminal device is 200 M, the maximum number of transport layers that can be supported by the PDSCH is 2. In this case, when the terminal device operates on only a single CC, a system bandwidth of the CC is 100 M, and the terminal device uses four ports. When the network device activates a secondary CC for the terminal device, and a system bandwidth of the secondary CC is 100 M, after receiving the SCell activation signaling, the terminal device needs to switch from a transmission mode of "bandwidth 100 M+a number 4 of ports" to a transmission mode of "bandwidth 200 M+a number 2 of ports".

Optionally, an SCell activation process includes one or more of the following behaviors implemented in the indicated transmission mode: transmission mode switching, beam measurement of a to-be-activated SCell, channel state information measurement of the to-be-activated SCell, beam measurement of an activated CC based on a new transmission mode, and channel state information measurement of the activated CC based on the new transmission mode.

Optionally, the SCell activation further includes one or more of the following information reported based on the indicated transmission mode: measurement information of the to-be-activated SCell, measurement information of the activated CC, and indication information indicating that transmission mode switching is successful.

Optionally, the terminal device receives, at the moment n, the SCell activation signaling sent by the network device. If the network device receives valid channel state information of the SCell before the moment n+T1, it is considered that SCell activation succeeds and transmission mode switching succeeds; otherwise, it is considered that SCell activation or transmission mode switching fails. A specific definition of T1 needs to consider a processing time required by the terminal device to perform the transmission mode switching.

Optionally, if the transmission mode indicated by the terminal device is different from a transmission mode used before the SCell activation signaling is received, and the transmission mode switching of the terminal device does not succeed, the SCell activation fails.

In another implementation, the SCell deactivation signaling does not explicitly carry the transmission mode indication, and the terminal device implicitly obtains new transmission mode indication information based on an operating bandwidth after an SCell is deactivated, performs transmission mode switching and SCell deactivation, and after the SCell is successfully deactivated, performs data receiving and sending based on the indicated transmission mode. For example, if a downlink reception bandwidth of the terminal device is 100 M, a maximum number of transport layers that can be supported by a PDSCH is four; or if the downlink reception bandwidth of the terminal device is 200 M, the maximum number of transport layers that can be supported by the PDSCH is 2. In this case, when the terminal device operates on only two CCs, and a system bandwidth of each CC is 100 M, the terminal device uses two ports. When the network device deactivates a secondary CC for the terminal device, after receiving the SCell deactivation signaling, the terminal device needs to switch from a transmission mode of "bandwidth 200 M+a number 2 of ports" to a transmission mode of "bandwidth 100 M+a number 4 of ports".

In another implementation, the SCell deactivation signaling carries the transmission mode indication, and the terminal device performs SCell deactivation based on the indicated transmission mode, and after an SCell is successfully deactivated, performs data receiving and sending based on the indicated transmission mode.

Optionally, if the transmission mode indicated by the terminal device is different from a transmission mode used before the SCell activation signaling is received, and the transmission mode switching of the terminal device does not succeed, it is considered that the SCell deactivation succeeds, and the terminal device reports, to the network device, information indicating that transmission mode switching does not succeed.

Still refer to FIG. 3. In 303, the terminal device performs the transmission mode switching.

In some embodiments, the transmission mode switching may include one or more of the following behaviors: changing an operating port of the terminal device, changing the operating bandwidth of the terminal device, or changing the baseband processing capability of the terminal device. Changing the operating port of the terminal device includes switching from one port capability to another port capability, and changing the operating bandwidth of the terminal device includes switching from one bandwidth capability to another bandwidth capability. For example, when the transmission mode is shown in Table 2 or Table 4, that the terminal device performs the transmission mode switching may include changing the operating port of the terminal device, for example, switching from four ports whose port capabilities are digital beamforming to two ports whose port capabilities are hybrid beamforming. When the transmission mode is shown in Table 3 or Table 4, that the terminal device performs the transmission mode switching may include changing the operating bandwidth of the terminal device, for example, switching from 100 MHz whose bandwidth capability is one carrier to 200 MHz whose bandwidth capability is two aggregated carriers, where before the switching, the terminal operates in a single-carrier mode, that is, can receive or send data only on one carrier; and after the switching, the terminal operates in a multi-carrier mode, that is, can simultaneously receive or send data on two carriers; or switching 100 MHz whose bandwidth capability is one carrier to 50 MHz whose bandwidth capability is one carrier. In some embodiments, changing the baseband processing capability of the terminal device includes comprehensively switching the port capability and the bandwidth capability of the terminal device.

The following specifically describes a transmission mode switching behavior that may be performed by the terminal device. In some embodiments, the transmission mode switching behavior may include changing a sending or receiving behavior of an intermediate radio frequency on the terminal device side, including one or more of the following behaviors: disabling a part of intermediate radio frequency reception channels, disabling a part of intermediate radio frequency transmission channels, enabling a part of intermediate radio frequency transmission channels, enabling a part of intermediate radio frequency reception channels, adjusting an operating bandwidth of one or more intermediate radio frequency channels, adjusting an operating frequency of one or more intermediate radio frequency channels, or the like.

In some embodiments, the transmission mode switching behavior may include changing an antenna set used for receiving or sending on the terminal device side, including one or more of the following behaviors: disabling a part of reception antennas, disabling a part of transmission antennas, enabling a part of transmission antennas, enabling a part of reception antennas, or the like.

In some embodiments, the transmission mode switching behavior may include changing an association relationship between an antenna and an intermediate radio frequency channel of the terminal device, including one or more of the following behaviors: switching from X1 antennas connected to Y1 radio frequency chains to X1 antennas connected to Y2 radio frequency chains, switching from X1 antennas connected to Y1 radio frequency chains to X2 antennas connected to Y1 radio frequency chains, or the like, where X1, X2, Y1, and Y2 are positive integers.

In some embodiments, the transmission mode switching behavior may include changing a mapping relationship between an antenna port and a physical antenna of the terminal device, including one or more of the following behaviors: switching a mapping relationship of mapping one antenna port to a plurality of physical antennas to mapping one antenna port to one physical antenna, switching a mapping relationship of mapping one antenna port to one physical antenna port to mapping one antenna port to a plurality of physical antennas, or the like.

Optionally, the transmission mode switching behavior further includes: The terminal device reports transmission mode switching success indication information to the network device after completing the transmission mode switching.

Optionally, the transmission mode switching behavior may further include: when the terminal device cannot successfully switch the transmission mode, reporting, to the network device, indication information indicating that the transmission mode switching does not succeed; and optionally, further reporting, to the network device, a reason why the transmission mode switching does not succeed.

Optionally, after receiving the transmission mode switching signaling, the terminal device needs to complete the transmission mode switching at an agreed time. The agreed time is related to different transmission capability switching latencies and/or signaling demodulation processing latencies that are reported by the terminal device.

Optionally, if the network device does not receive the transmission mode switching success indication at the agreed time, it is considered that the transmission mode switching of the terminal device does not succeed, and it is considered that the terminal device performs transmission in the transmission mode used before the switching.

Optionally, when performing the transmission mode switching, the terminal device needs to interrupt uplink and downlink data receiving and sending behaviors.

After the transmission mode switching, in 304, the terminal device 120 and the network device 110 may perform uplink and downlink data transmission based on the new transmission mode after the switching. For example, the terminal device performs downlink signal receiving and/or uplink data sending based on the indicated transmission mode.

Optionally, the uplink data sending includes: The terminal device notifies the network device that the transmission mode switching has been successfully completed.

Optionally, the uplink data sending includes a channel state information measurement result based on a new transmission mode, where the channel state information measurement result includes one or more of the following information: channel state information (channel state information, CSI), a precoding matrix indicator (precoding matrix indication, PMI), a channel rank indicator (rank indicator, RI), a channel quality indicator (channel quality indicator, CQI), or a signal to interference plus noise ratio (signal to interference plus noise ratio, SINR).

The foregoing reference process 300 describes the solutions according to some embodiments of the present disclosure. In the solutions, the network device may dynamically change a transmission bandwidth and numbers of reception and transmission antennas of the terminal device based on a real-time service requirement. When the service volume is small, a part of antennas are disabled, or a baseband bandwidth processing requirement is reduced, to save energy of the terminal device. When a main path prevails and the service volume is large, a part of antennas are disabled, and a transmission bandwidth is increased, to implement high-capacity transmission.

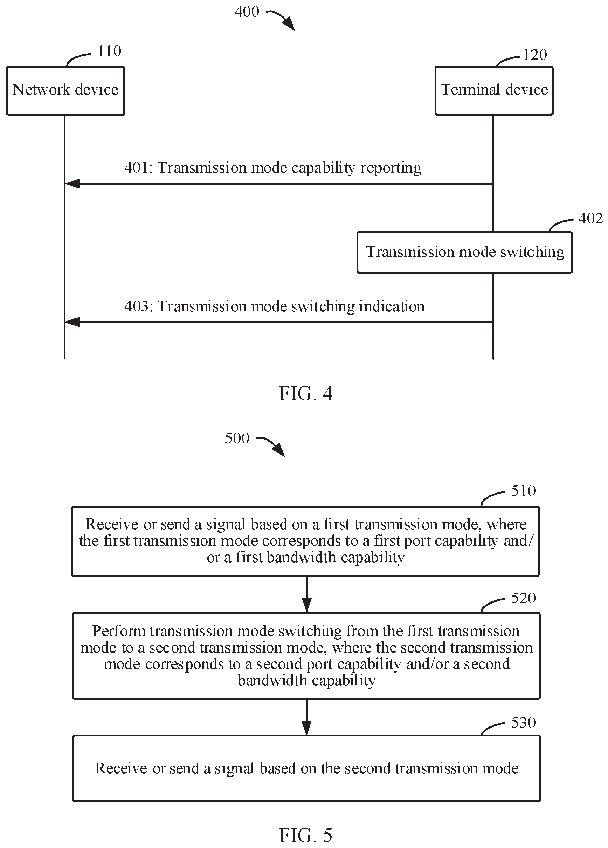

FIG. 4 is a signaling diagram of another communication process 400 according to some embodiments of the present disclosure. The process 400 may be an example implementation of the process 200 shown in FIG. 2. Similar to those in the process 200, the network device 110 and the terminal device 120 may be used in the process 400.

Refer to FIG. 4. In 401, the terminal device 120 reports capability information of a transmission mode, that is, the terminal device 120 reports the supported capability information to the network device 110.

Optionally, the capability information may include a parameter 1: whether the terminal device supports sharing of a bandwidth capability and a port capability. The capability parameter represents whether a baseband processing capability of the terminal device can support switching between different bandwidths and different numbers of ports. For example, in an implementation, the terminal device reduces numbers of reception and transmission ports, and supports transmission with a larger bandwidth based on a saved processing capability. In an implementation, the terminal device reduces a transmission bandwidth, and supports transmission with a larger number of ports based on a saved processing capability.

Optionally, the capability information may include a parameter 2: a number of ports that can be supported by the terminal device. The capability parameter may represent a number of SRS transmission ports, a maximum number of MIMO layers in downlink PDSCH transmission, a number of transmission ports in downlink CSIRS transmission, or a maximum number of MIMO layers in PUSCH transmission.

Optionally, the capability information may include a parameter 3: a bandwidth that can be supported by the terminal device. The capability parameter may represent a maximum single-carrier uplink transmission bandwidth, a maximum single-carrier downlink transmission bandwidth, an uplink multi-carrier aggregation bandwidth, a downlink multi-carrier aggregation bandwidth, a number of downlink aggregated multi-carriers, a number of uplink aggregated multi-carriers, a maximum pilot signal transmission bandwidth, a maximum data channel transmission bandwidth, or the like.

Optionally, the capability information may include a parameter 4: a processing latency for switching between different transmission capabilities. The capability parameter may represent a processing time required for switching an operating bandwidth by the terminal device, a processing time required for switching a connection relationship between a radio frequency chain and a physical antenna by the terminal device, a processing time required for switching a number of ports by the terminal device, a processing time required for reconstructing a baseband processing capability by the terminal device, or the like.

Optionally, the capability information may include a parameter 5: a capability conversion factor "a" between a bandwidth and a port. The capability parameter may represent that when the terminal device adjusts the bandwidth from A1 to A2, a number of ports that can be supported may be adjusted from B1 to B2, and a value of B2 is related to "a", A1, A2, and B1; or when the terminal device adjusts the number of ports from A1 to A2, the bandwidth that can be supported may be adjusted from B1 to B2, and a value of B2 is related to "a", A1, A2, and B1.

In some embodiments, the bandwidth may be a single-carrier bandwidth, a multi-carrier aggregation bandwidth, a downlink bandwidth, an uplink bandwidth, or the like. The port may be a pilot port, a data port, a number of downlink MIMO layers, a number of uplink MIMO layers, an antenna port, a transmission port, a reception port, a transmission antenna port, a reception antenna port, or the like. The connection relationship between the radio frequency chain and the physical antenna may be an antenna structure using DBF, HBF, ABF, or the like. The data channel may be one or more of the following signals: a PUCCH, a PDCCH, a PUSCH, a PDSCH, or the like. The pilot signal may be one or more of the following signals: a CSIRS, an SSB, a DMRS, a TRS, a PTRS, an SRS, a CRS, or the like.

In some embodiments, a transmission capability parameter reported by the terminal device may be a plurality of parameter combinations or a plurality of values of one parameter. The plurality of parameter combinations are one transmission capability, and different transmission capabilities correspond to different values of a same parameter combination. The terminal device may report a plurality of values of the plurality of parameter combinations, to represent a plurality of transmission capabilities that can be supported by the terminal device.

In some embodiments, the capability information of the transmission mode may be reported by using RRC signaling, a MAC-CE, UCI, a PUCCH, and/or a PUSCH.

Still refer to FIG. 4. In 402, the terminal device performs the transmission mode switching. A difference from the process 300 is that in the process 400, the terminal device may autonomously determine to perform the transmission mode switching without using a transmission mode indication of the network device. For example, the terminal device may determine, based on a service requirement or a power consumption requirement, to perform the transmission mode switching.

In some embodiments, the transmission mode switching may include one or more of the following behaviors: changing an operating port of the terminal device, changing the operating bandwidth of the terminal device, or changing the baseband processing capability of the terminal device. Changing the operating port of the terminal device includes switching from one port capability to another port capability, and changing the operating bandwidth of the terminal device includes switching from one bandwidth capability to another bandwidth capability. For example, when the transmission mode is shown in Table 2 or Table 4, that the terminal device performs the transmission mode switching may include changing the operating port of the terminal device, for example, switching from four ports whose port capabilities are digital beamforming to two ports whose port capabilities are hybrid beamforming. When the transmission mode is shown in Table 3 or Table 4, that the terminal device performs the transmission mode switching may include changing the operating bandwidth of the terminal device, for example, switching from 100 MHz whose bandwidth capability is one carrier to 200 MHz whose bandwidth capability is two aggregated carriers, where before the switching, the terminal operates in a single-carrier mode, that is, can receive or send data only on one carrier; and after the switching, the terminal operates in a multi-carrier mode, that is, can simultaneously receive or send data on two carriers; or switching 100 MHz whose bandwidth capability is one carrier to 50 MHz whose bandwidth capability is one carrier. In some embodiments, changing the baseband processing capability of the terminal device includes comprehensively switching the port capability and the bandwidth capability of the terminal device.

The following specifically describes a transmission mode switching behavior that may be performed by the terminal device. In some embodiments, the transmission mode switching behavior may include changing a sending or receiving behavior of an intermediate radio frequency on the terminal device side, including one or more of the following behaviors: disabling a part of intermediate radio frequency reception channels, disabling a part of intermediate radio frequency transmission channels, enabling a part of intermediate radio frequency transmission channels, enabling a part of intermediate radio frequency reception channels, adjusting an operating bandwidth of one or more intermediate radio frequency channels, adjusting an operating frequency of one or more intermediate radio frequency channels, or the like.

In some embodiments, the transmission mode switching behavior may include changing an antenna set used for receiving or sending on the terminal device side, including one or more of the following behaviors: disabling a part of reception antennas, disabling a part of transmission antennas, enabling a part of transmission antennas, enabling a part of reception antennas, or the like.

In some embodiments, the transmission mode switching behavior may include changing an association relationship between an antenna and an intermediate radio frequency channel of the terminal device, including one or more of the following behaviors: switching from X1 antennas connected to Y1 intermediate radio frequency channels to X1 antennas connected to Y2 intermediate radio frequency channels, switching from X1 antennas connected to Y1 intermediate radio frequency channels to X2 antennas connected to Y1 intermediate radio frequency channels, or the like, where X1, X2, Y1, and Y2 are positive integers.

In some embodiments, the transmission mode switching behavior may include changing a mapping relationship between an antenna port and a physical antenna of the terminal device, including one or more of the following behaviors: switching a mapping relationship of mapping one antenna port to a plurality of physical antennas to mapping one antenna port to one physical antenna, switching a mapping relationship of mapping one antenna port to one physical antenna port to mapping one antenna port to a plurality of physical antennas, or the like.

Optionally, before performing the transmission mode switching, the terminal device may perform pilot measurement. The pilot measurement indicates the terminal device to select a specific transmission mode for signal receiving and sending. The pilot may reuse an existing pilot signal, for example, an SSB, a CSIRS, a DMRS, a PTRS, or a TRS. Alternatively, a new dedicated pilot may be defined, and is specifically for guiding the terminal device in transmission mode selection.

Optionally, before performing the transmission mode switching, the terminal device may send the transmission mode switching request to the network device, and perform the transmission mode switching after being allowed by the network device.

Optionally, before performing the transmission mode switching, the terminal device may send the transmission mode switching request to the network device. If the network device does not allow the terminal device to perform the transmission mode switching, the terminal device does not perform the transmission mode switching.

Still refer to FIG. 4. In 403, the terminal device reports the transmission mode switching to the network device.

In an implementation, the terminal device reports a transmission mode switching message to the network device, and reported content includes one or more of the following: notifying the network device that the transmission mode of the terminal device is switched, notifying the network device of a new transmission mode, notifying the network device of a channel state information measurement result obtained based on the new transmission mode, or notifying the network device of a reason why the transmission mode is switched.

The following specifically describes a manner in which the terminal device reports the transmission mode switching. In an implementation, the terminal device sends a PRACH message, where the message implicitly notifies the network device that the transmission mode of the terminal device is switched. Specifically, the network device configures one PRACH sequence and/or a PRACH resource set for the terminal device by using RRC signaling. The PRACH set is specially used by the terminal device to send the transmission mode switching message. To be specific, after the transmission mode switching occurs on the terminal device, the terminal device sends a PRACH signal by using the PRACH sequence and/or a PRACH resource pre-allocated by the network device. After receiving the signal, the network device considers that the transmission mode switching occurs on the terminal device.

In another implementation, the terminal device sends a reporting request, the network device allocates an uplink resource to the terminal device, and the terminal device reports the transmission mode switching message to the network device based on the allocated uplink resource. Specifically, the terminal device may apply to the network device for the uplink resource by using one or more of the following methods: sending a PRACH signal; sending a scheduling request message; defining a new MAC-CE message, used to carry reporting of the transmission mode switching message; or defining a new UCI message, used to carry reporting of the transmission mode switching message.

The foregoing reference process 400 describes solutions according to some embodiments of the present disclosure. In the solutions, the terminal device may dynamically disable a part of transmission or reception channels, to reduce power consumption of the terminal device; or the terminal device may dynamically enable more transmission or reception channels, to implement higher-rate transmission, thereby improving a user-perceived rate.

According to some embodiments of the present disclosure, the transmission mode of the terminal device is defined, and dynamic switching may be performed between different transmission modes. In some embodiments, a transmission mode capability parameter is defined, and a plurality of capability parameter combinations are one transmission mode, for example, a pilot port and an operating bandwidth; a number of MIMO layers and an operating bandwidth; a pilot port, a number of MIMO layers, and an operating bandwidth; or the like. The terminal device may report capability information of one or more transmission modes. In some embodiments, the solutions of the present disclosure support dynamic switching between different transmission modes. For example, the network device may determine whether the terminal device performs the transmission mode switching, and deliver a transmission mode switching indication; or the terminal device determines whether to perform the transmission mode switching, and reports a transmission mode switching indication to the network device. In some embodiments, a transmission mode switching behavior is defined, including: changing a sending or receiving behavior of an intermediate radio frequency on a terminal device side; changing an antenna set used for receiving or sending on the terminal device side; changing an association relationship between an antenna and an intermediate radio frequency channel of the terminal device; or the like.

In a current protocol, the terminal device reports a maximum operating bandwidth that can be supported or a maximum number of MIMO layers that can be supported. When the transmission bandwidth or the number of MIMO layers of the terminal device is not fully used at a current moment, there is a surplus in the baseband processing capability of the terminal device. According to the solutions in some embodiments of the present disclosure, the surplus in the baseband processing capability of the terminal device can be used to support transmission of a larger transmission bandwidth or a larger number of MIMO layers, thereby improving a user capacity.

FIG. 5 is a flowchart of a communication process 500 according to some embodiments of the present disclosure. The communication process 500 may be implemented at the terminal device 120 shown in FIG. 1A to FIG. 4.

Refer to FIG. 5. In step 510, the terminal device 120 receives or sends a signal based on a first transmission mode, where the first transmission mode corresponds to a first port capability and/or a first bandwidth capability.

In 520, the terminal device 120 performs transmission mode switching from the first transmission mode to a second transmission mode, where the second transmission mode corresponds to a second port capability and/or a second bandwidth capability. In step 530, the terminal device 120 receives or sends a signal based on the second transmission mode.

In some embodiments, the first port capability and the second port capability include at least one of the following: a number of pilot ports, a number of data ports, a number of pilot layers, a number of data channel layers, a number of transmission antenna ports, a number of reception antenna ports, a number of transmission ports, a number of reception ports, or a connection relationship between a radio frequency chain and an antenna.

In some embodiments, the first bandwidth capability and the second bandwidth capability include at least one of the following: a single-carrier bandwidth, a multi-carrier aggregation bandwidth, a number of aggregated multi-carriers, a pilot signal bandwidth, a data channel bandwidth, an uplink bandwidth, a downlink bandwidth, or an operating bandwidth of a radio frequency chain.

In some embodiments, the first bandwidth capability is less than or equal to the second bandwidth capability when the first port capability is greater than or equal to the second port capability, or the first port capability is less than or equal to the second port capability when the first bandwidth capability is greater than or equal to the second bandwidth capability.

In some embodiments, before performing the transmission mode switching, the terminal device sends, to a network device, capability information supported by the terminal device, where the capability information indicates a port capability and/or a bandwidth capability, the port capability includes at least the first port capability and the second port capability, and the bandwidth capability includes at least the first bandwidth capability and the second bandwidth capability. In some embodiments, the capability information further indicates a processing latency for switching between different capabilities. In some embodiments, the processing latency for switching between different capabilities may be reported separately.

In some embodiments, before performing the transmission mode switching, the terminal device receives a transmission mode indication from the network device, where the transmission mode indication includes the second transmission mode and/or a time at which the second transmission mode takes effect. In some embodiments, receiving the transmission mode indication includes at least one of the following: receiving the transmission mode indication by using RRC signaling; receiving the transmission mode indication by using BWP configuration information; receiving the transmission mode indication by using serving cell configuration information; receiving the transmission mode indication by using SCell activation signaling; or receiving the transmission mode indication by using SCell deactivation signaling.

In some embodiments, the behavior of performing the transmission mode switching by the terminal device includes one or more of the following behaviors: changing an operating port of the terminal device, changing the operating bandwidth of the terminal device, or changing the baseband processing capability of the terminal device.

In some embodiments, before performing the transmission mode switching, the terminal device sends a transmission mode switching request to the network device. In some embodiments, sending the transmission mode switching request includes at least one of the following: sending the transmission mode switching request through a PRACH; sending the transmission mode switching request through a PUSCH; or sending the transmission mode switching request through a PUCCH.

In some embodiments, the transmission mode switching request includes at least one of the following: an uplink resource request used to report the second transmission mode, a reason why the terminal device performs the transmission mode switching, an indication of the second transmission mode after the switching, or a transmission mode switching guard interval. In some embodiments, a trigger condition for sending the transmission mode switching request to the network device includes at least one of the following: an energy saving requirement of the terminal device changes; channel quality of the terminal device changes; service load of the network device changes; a to-be-transmitted service volume of the terminal device changes; or a channel feature of the terminal device changes.

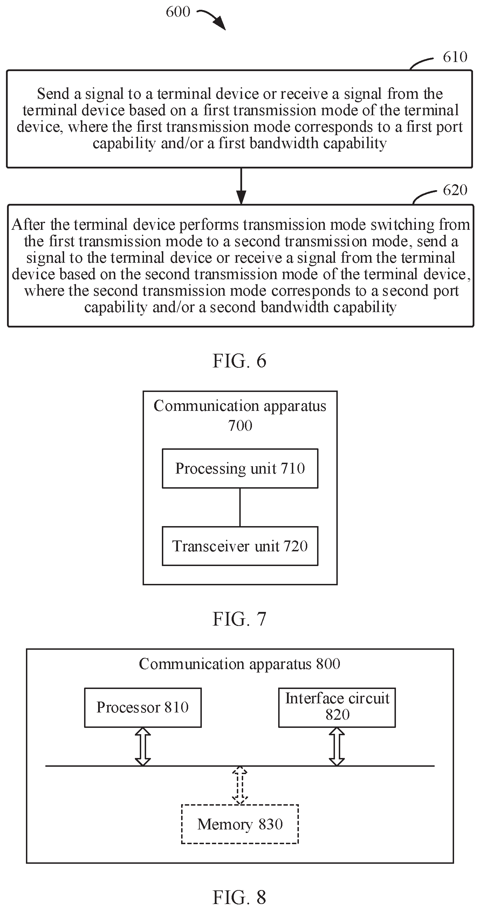

FIG. 6 is a flowchart of a communication process 600 according to some embodiments of the present disclosure. The communication process 600 may be implemented at the network device 110 shown in FIG. 1A to FIG. 4.

Refer to FIG. 6. In step 610, the network device 110 sends a signal to the terminal device 120 or receives a signal from the terminal device 120 based on a first transmission mode of the terminal device 120, where the first transmission mode corresponds to a first port capability and/or a first bandwidth capability.

In 620, after the terminal device 120 performs transmission mode switching from the first transmission mode to a second transmission mode, the network device 110 sends a signal to the terminal device 120 or receives a signal from the terminal device 120 based on the second transmission mode of the terminal device 120, where the second transmission mode corresponds to a second port capability and/or a second bandwidth capability.

In some embodiments, the first port capability and the second port capability include at least one of the following: a number of pilot ports, a number of data ports, a number of pilot layers, a number of data channel layers, a number of transmission antenna ports, a number of reception antenna ports, a number of transmission ports, a number of reception ports, or a connection relationship between a radio frequency chain and an antenna.

In some embodiments, the first bandwidth capability and the second bandwidth capability include at least one of the following: a single-carrier bandwidth, a multi-carrier aggregation bandwidth, a number of aggregated multi-carriers, a pilot signal bandwidth, a data channel bandwidth, an uplink bandwidth, a downlink bandwidth, or an operating bandwidth of a radio frequency chain.

In some embodiments, the first bandwidth capability is less than or equal to the second bandwidth capability when the first port capability is greater than or equal to the second port capability, or the first port capability is less than or equal to the second port capability when the first bandwidth capability is greater than or equal to the second bandwidth capability.

In some embodiments, the network device receives, from the terminal device, capability information supported by the terminal device, where the capability information indicates a port capability and/or a bandwidth capability, the port capability includes at least the first port capability and the second port capability, and the bandwidth capability includes at least the first bandwidth capability and the second bandwidth capability. In some embodiments, the capability information further indicates a processing latency for switching between different capabilities. In some embodiments, the processing latency for switching between different capabilities may be reported separately.

In some embodiments, the network device determines, based on the capability information, one or more transmission modes supported by the terminal device; and determines, from the one or more transmission modes, the second transmission mode to which the terminal device is to switch. In some embodiments, the network device sends a transmission mode indication to the terminal device, where the transmission mode indication includes the second transmission mode and/or a time at which the second transmission mode takes effect.

In some embodiments, sending the transmission mode indication includes at least one of the following: sending the transmission mode indication by using RRC signaling; sending the transmission mode indication by using BWP configuration information; sending the transmission mode indication by using serving cell configuration information; sending the transmission mode indication by using SCell activation signaling; or sending the transmission mode indication by using SCell deactivation signaling.

In some embodiments, the network device receives a transmission mode switching request from the terminal device. In some embodiments, the transmission mode switching request includes at least one of the following: an uplink resource used by the terminal device to report the second transmission mode, a reason why the terminal device performs the transmission mode switching, an indication of the second transmission mode after the switching, or a transmission mode switching guard interval.

In some embodiments, the network device receives, from the terminal device, a message indicating that the transmission mode switching has been completed, where the message indicating that the transmission mode switching has been completed includes at least one of the following: whether the transmission mode switching is completed, a reason why the terminal device performs the transmission mode switching, and an indication of the second transmission mode after the switching.

FIG. 7 and FIG. 8 are diagrams of possible structures of communication apparatuses according to embodiments of the present disclosure. These communication apparatuses may be configured to implement functions of the network device or the terminal device in the foregoing method embodiments, and therefore can also implement beneficial effect of the foregoing method embodiments. In embodiments of the present disclosure, the communication apparatus may be the network device 110 or the terminal device 120 shown in FIG. 1A to FIG. 1C, or may be a module (for example, a chip) used in the network device or the terminal device.

As shown in FIG. 7, the communication apparatus 700 includes a transceiver unit 720, and the communication apparatus 700 may further include a processing unit 710, configured to process data received and sent by the transceiver unit 720 or other data. The communication apparatus 700 is configured to implement functions of the network device or the terminal device in the embodiments shown in FIG. 2 to FIG. 6.

Optionally, the transceiver unit 720 may include a sending unit and a receiving unit. The sending unit is configured to perform a sending operation in the foregoing method embodiments. The receiving unit is configured to perform a receiving operation in the foregoing method embodiments.

It should be noted that the communication apparatus 700 may include the sending unit, but does not include the receiving unit. Alternatively, the communication apparatus 700 may include the receiving unit, but does not include the sending unit. This may be specifically determined based on whether the foregoing solution performed by the communication apparatus 700 includes a sending action and a receiving action.

When the communication apparatus 700 is configured to implement the functions of the terminal device in the embodiments shown in FIG. 2 to FIG. 6, the transceiver unit 720 is configured to receive or send a signal based on a first transmission mode, where the first transmission mode corresponds to a first port capability and/or a first bandwidth capability; the processing unit 710 is configured to perform transmission mode switching from the first transmission mode to a second transmission mode, where the second transmission mode corresponds to a second port capability and/or a second bandwidth capability; and the transceiver unit 720 is further configured to receive or send a signal based on the second transmission mode.

When the communication apparatus 700 is configured to implement the functions of the network device in the embodiments shown in FIG. 2 to FIG. 6, the transceiver unit 720 is configured to send a signal to a terminal device or receive a signal from the terminal device based on a first transmission mode of the terminal device, where the first transmission mode corresponds to a first port capability and/or a first bandwidth capability; and the transceiver unit 720 is further configured to: after the terminal device performs transmission mode switching from the first transmission mode to a second transmission mode, send a signal to the terminal device or receive a signal from the terminal device based on the second transmission mode of the terminal device, where the second transmission mode corresponds to a second port capability and/or a second bandwidth capability.

For more detailed descriptions of the transceiver unit 720 and the processing unit 710, refer to related descriptions in the embodiments shown in FIG. 2 to FIG. 6. Details are not described herein again.

The processing unit 710 in the foregoing embodiment may be implemented by at least one processor or a processor-related circuit. The transceiver unit 720 may be implemented by a transceiver or a transceiver-related circuit. The transceiver module 720 may also be referred to as a communication module or a communication interface. The storage module may be implemented by at least one memory.

In this embodiment of the present disclosure, the antenna and the radio frequency circuit that have receiving and sending functions may be considered as a transceiver unit of the terminal device, and the processor that has a processing function may be considered as a processing unit of the terminal device.

As shown in FIG. 8, the communication apparatus 800 includes a processor 810 and an interface circuit 820. The processor 810 and the interface circuit 820 are coupled to each other. The processor 810 may also be referred to as a processing unit, a processing board, a processing module, a processing apparatus, or the like.

It may be understood that the interface circuit 820 may be a transceiver or an input/output interface. The transceiver includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

Optionally, the communication apparatus 800 may further include a memory 830, configured to store instructions to be executed by the processor 810, store input data required for running the instructions by the processor 810, or store data generated after the processor 810 runs the instructions.

When the apparatus 800 is a chip, the chip includes a processor, a memory, and a transceiver. The transceiver may be an input/output circuit or a communication interface. The processor may be a processing module, a microprocessor, or an integrated circuit integrated on the chip. In this embodiment of the present disclosure, a sending operation of the communication apparatus may be understood as an output of the chip, and a receiving operation of the communication apparatus may be understood as an input of the chip.

When the communication apparatus 800 is configured to implement the processes shown in FIG. 2 to FIG. 6, the interface circuit 820 is configured to implement the function of the transceiver unit 720.

When the communication apparatus is a chip used in a terminal device, the terminal chip implements a function of the terminal device in the foregoing method embodiments. The terminal chip receives, through another module (for example, a radio frequency module or an antenna) in the terminal, information sent by a network device to the terminal device; or the terminal chip sends information to another module (for example, a radio frequency module or an antenna) in the terminal device, where the information is sent by the terminal device to a network device.

When the communication apparatus is a module used in a network device, the module in the network device implements a function of the network device in the foregoing method embodiments. The network device module receives information from another module (for example, a radio frequency module or an antenna) in the network device, where the information is sent by a terminal device to the network device; or the network device module sends information to another module (for example, a radio frequency module or an antenna) in the base station, where the information is sent by the network device to a terminal device. The network device module herein may be a baseband chip of the base station, or may be a CU, a DU, or another module, or may be an apparatus in an O-RAN architecture, for example, an apparatus like an open CU or an open DU.

It may be understood that the processor in embodiments of the present disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any conventional processor, or the like.

The method steps in embodiments of the present disclosure may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in the base station or the terminal as discrete components.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer program or instructions are loaded and executed on a computer, the procedures or functions in embodiments of the present disclosure are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of the present disclosure, unless otherwise specified or there is a logic conflict, terms and/or descriptions between different embodiments are consistent and may be mutually referenced, and technical features in different embodiments may be combined based on an internal logical relationship thereof, to form a new embodiment.

In the present disclosure, "at least one" means one or more, and "a plurality of" means two or more than two. "And/or" describes an association relationship between associated objects and indicates that three relationships may exist. For example, A and/or B may indicate the following cases: Only A exists, both A and B exist, and only B exists, where A and B may be singular or plural. In the text descriptions of the present disclosure, the character "/" usually indicates an "or" relationship between the associated objects. In a formula in the present disclosure, the character "/" indicates a "division" relationship between the associated objects. "Including at least one of A, B, and C" may indicate the following cases: including A; including B; including C; including A and B; including A and C; including B and C; and including A, B, and C.

It may be understood that various numbers in embodiments of the present disclosure are merely used for differentiation for ease of description, and are not used to limit the scope of embodiments of the present disclosure. Sequence numbers of the foregoing processes do not mean an execution sequence, and the execution sequence of the processes should be determined based on functions and internal logic of the processes.

## Claims

1. A data transmission method, comprising:
receiving or sending a signal based on a first transmission mode, wherein the first transmission mode corresponds to a first port capability and/or a first bandwidth capability;
performing transmission mode switching from the first transmission mode to a second transmission mode, wherein the second transmission mode corresponds to a second port capability and/or a second bandwidth capability; and
receiving or sending a signal based on the second transmission mode.

2. The method according to claim 1, further comprising:
before performing the transmission mode switching, sending, to a network device, capability information supported by a terminal device, wherein the capability information indicates a port capability and/or a bandwidth capability, the port capability comprises at least the first port capability and the second port capability, and the bandwidth capability comprises at least the first bandwidth capability and the second bandwidth capability.

3. The method according to claim 2, wherein the capability information further indicates a processing latency for switching between different capabilities.

4. The method according to any one of claims 1 to 3, further comprising: before performing the transmission mode switching, receiving a transmission mode indication from the network device, wherein the transmission mode indication comprises the second transmission mode and/or a time at which the second transmission mode takes effect.

5. The method according to any one of claims 1 to 4, wherein performing the transmission mode switching comprises at least one of the following:
changing an operating port of the terminal device;
changing an operating bandwidth of the terminal device; or
changing a baseband processing capability of the terminal device.

6. The method according to any one of claims 1 to 5, further comprising:
before performing the transmission mode switching, sending a transmission mode switching request to the network device.

7. The method according to claim 6, wherein a trigger condition for sending the transmission mode switching request comprises at least one of the following:
an energy saving requirement of the terminal device changes;
channel quality of the terminal device changes;
service load of the network device changes;
a to-be-transmitted service volume of the terminal device changes; or
a channel feature of the terminal device changes.

8. A data transmission method, comprising:
sending a signal to a terminal device or receiving a signal from the terminal device based on a first transmission mode of the terminal device, wherein the first transmission mode corresponds to a first port capability and/or a first bandwidth capability; and
after the terminal device performs transmission mode switching from the first transmission mode to a second transmission mode, sending the signal to the terminal device or receiving the signal from the terminal device based on the second transmission mode of the terminal device, wherein the second transmission mode corresponds to a second port capability and/or a second bandwidth capability.

9. The method according to claim 8, further comprising:
receiving, from the terminal device, capability information supported by the terminal device, wherein the capability information indicates a port capability and/or a bandwidth capability, the port capability comprises at least the first port capability and the second port capability, and the bandwidth capability comprises at least the first bandwidth capability and the second bandwidth capability.

10. The method according to claim 9, wherein the capability information further indicates a processing latency for switching between different capabilities.

11. The method according to claim 9 or 10, further comprising:
determining, based on the capability information, one or more transmission modes supported by the terminal device; and
determining, from the one or more transmission modes, the second transmission mode to which the terminal device is to switch.

12. The method according to claim 11, further comprising:
sending a transmission mode indication to the terminal device, wherein the transmission mode indication comprises the second transmission mode and/or a time at which the second transmission mode takes effect.

13. The method according to any one of claims 8 to 12, further comprising:
receiving a transmission mode switching request from the terminal device.

14. The method according to any one of claims 8 to 13, further comprising:
receiving, from the terminal device, a message indicating that the transmission mode switching has been completed, wherein the message indicating that the transmission mode switching has been completed comprises at least one of the following: whether the transmission mode switching is completed, a reason why the terminal device performs the transmission mode switching, and an indication of the second transmission mode after the switching.

15. The method according to any one of claims 1 to 14, wherein the first port capability and the second port capability comprise at least one of the following: a number of pilot ports, a number of data ports, a number of pilot layers, a number of data channel layers, a number of transmission antenna ports, a number of reception antenna ports, a number of transmission ports, a number of reception ports, or a connection relationship between a radio frequency chain and an antenna.

16. The method according to any one of claims 1 to 15, wherein the first bandwidth capability and the second bandwidth capability comprise at least one of the following: a single-carrier bandwidth, a multi-carrier aggregation bandwidth, a number of aggregated multi-carriers, a pilot signal bandwidth, a data channel bandwidth, an uplink bandwidth, a downlink bandwidth, or an operating bandwidth of a radio frequency chain.

17. The method according to any one of claims 1 to 16, wherein the first bandwidth capability is less than or equal to the second bandwidth capability when the first port capability is greater than or equal to the second port capability, or the first port capability is less than or equal to the second port capability when the first bandwidth capability is greater than or equal to the second bandwidth capability.

18. The method according to claim 4 or 12, wherein the transmission mode indication is carried by at least one of the following:
radio resource control RRC signaling;
bandwidth part BWP configuration information;
serving cell configuration information;
secondary cell SCell activation signaling; or
SCell deactivation signaling.

19. The method according to claim 6, 7, or 13, wherein the transmission mode switching request comprises at least one of the following: a request for reporting an uplink resource of the second transmission mode, a reason why the terminal device performs the transmission mode switching, an indication of the second transmission mode after the switching, or a transmission mode switching guard interval.

20. The method according to claim 6, 7, 13 or 19, wherein the transmission mode switching request is carried by at least one of the following:
a physical random access channel PRACH;
a physical uplink shared channel PUSCH; or
a physical uplink control channel PUCCH.

21. A communication apparatus, comprising a transceiver module and a processing module, wherein
the transceiver module is configured to perform receiving and sending operations in the method according to any one of claims 1 to 7 and 15 to 20, and the processing module is configured to perform a processing operation in the method according to any one of claims 1 to 7 and 15 to 20.

22. A communication apparatus, comprising a transceiver module, wherein
the transceiver module is configured to perform receiving and sending operations in the method according to any one of claims 8 to 20.

23. The communication apparatus according to claim 22, wherein the apparatus further comprises a processing module; and
the transceiver module is configured to perform receiving and sending operations in the method according to any one of claims 8 to 20, and the processing module is configured to perform a processing operation in the method according to any one of claims 8 to 20.

24. A communication apparatus, comprising:
a processor, wherein the processor is configured to execute a computer program or computer instructions in a memory, to perform the method according to any one of claims 1 to 20.

25. A communication system, comprising a first communication apparatus and a second communication apparatus, wherein the first communication apparatus is configured to perform the method according to any one of claims 1 to 7 and 15 to 20, and the second communication apparatus is configured to perform the method according to any one of claims 8 to 20.

26. A computer-readable storage medium, wherein the computer-readable storage medium stores a computer program; and when the computer program is executed by an apparatus, the apparatus is enabled to perform the method according to any one of claims 1 to 20.
